(19) Europäisches Patentamt / European Patent Office / Office européen des brevets

(11) **EP 4 678 455 A1**

(12) **EUROPEAN PATENT APPLICATION**
published in accordance with Art. 153(4) EPC

(43) Date of publication:
14.01.2026 Bulletin 2026/03

(21) Application number: 24766907.0

(22) Date of filing: 22.02.2024

(51) International Patent Classification (IPC):
*B60L 3/00* (2019.01)     *B60K 11/04* (2006.01)
*F25B 1/00* (2006.01)

(52) Cooperative Patent Classification (CPC):
B60K 11/04; B60L 3/00; F25B 1/00

(86) International application number:
PCT/JP2024/006569

(87) International publication number:
WO 2024/185536 (12.09.2024 Gazette 2024/37)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 03.03.2023 JP 2023032908

(71) Applicant: DENSO CORPORATION
Kariya-city, Aichi 448-8661 (JP)

(72) Inventors:
• YAMAMOTO, Hiroyoshi
  Kariya-city, Aichi 448-8661 (JP)
• NUMATA, Masanari
  Kariya-city, Aichi 448-8661 (JP)
• YOKOYAMA, Naoki
  Kariya-city, Aichi 448-8661 (JP)

(74) Representative: TBK
Bavariaring 4-6
80336 München (DE)

(54) **REFRIGERATION CYCLE DEVICE**

(57) A circuit switching unit (38) switches a heat medium circuit between a first circulation state in which the heat medium is circulated between a powertrain device (35, 36) and a radiator (32) and a second circulation state in which the heat medium is circulated between the powertrain device and a chiller (17). A circuit switching determiner (60f) determines that the heat medium circuit is switched by the circuit switching unit from the first circulation state to the second circulation state upon determining that the temperature of the powertrain device is higher than a predetermined threshold (PT) in the first circulation state. A cooling switching unit (16) switches a cooling mode of the heat medium between a chiller cooling state in which the heat medium is cooled by the chiller and a chiller non-cooling state in which the heat medium is not cooled by the chiller. A chiller cooling determiner (60c) determines a chiller cooling start timing of switching the cooling mode of the heat medium from the chiller non-cooling state to the chiller cooling state in accordance with driving-condition related information that is related to a driving condition of the vehicle.

FIG.6

**Description**

CROSS-REFERENCE TO RELATED APPLICATION

The present application is based on and claims the benefit of priority from Japanese Patent Application No. 2023-32908 filed on March 3, 2023, the disclosure of which is incorporated herein by reference.

TECHNICAL FIELD

The present disclosure relates to refrigeration cycle apparatuses for cooling power-train devices.

BACKGROUND

Patent Literature 1 discloses a refrigeration cycle device installed in a vehicle, which recovers exhaust heat from power-train devices, such as an inverter and a motor-generator, and heats the cabin of the vehicle using the recovered heat. Each of the power-train devices is an electrical device for generating driving power for the vehicle, and generates heat as a product of its operation.

The conventional technology disclosed in Patent Literature 1 includes a coolant cooling evaporator, a low-temperature side radiator, and power train devices arranged in parallel in a low-temperature coolant circuit through which a low-temperature coolant circulates. The coolant cooling evaporator exchanges heat between a low-pressure refrigerant in the refrigeration cycle and the low-temperature coolant in the low-temperature coolant circuit, thus causing the low-pressure refrigerant to absorb heat from the low-temperature coolant. The low-temperature side radiator dissipates heat from the low-temperature coolant to the outside air.

The conventional technology controls three-way valves to switch between (i) a heating mode in which the low-temperature coolant circulates between the power-train devices and the coolant cooling evaporator and (ii) a cooling mode in which the low-temperature coolant circulates between the power-train devices and the low-temperature side radiator.

In the heating mode in which the low-temperature coolant circulates between the power-train devices and the coolant cooling evaporator, exhaust heat from the power-train devices is used to heat the cabin of the vehicle. In the cooling mode in which the low-temperature coolant circulates between the power-train devices and the low-temperature side radiator, the exhaust heat from the power-train devices is dissipated into the outside air.

CROSS-REFERENCES

Patent Literature 1 Japanese Patent Publication No. 6791052

SUMMARY

In the above conventional technology, there may be a room for reduction in size of each power-train device and improvement in driving performance of the vehicle, because it appears that the above conventional technology may not consider efficient cooling of the power-train devices in the above conventional technology.

The present disclosure seeks therefore to efficiently cool a power-train device.

A refrigeration cycle apparatus according to an exemplary aspect of the present disclosure includes a heat medium circuit, a powertrain device, a radiator, a chiller, a circuit switching unit, a cooling switching unit, and a chiller cooling determiner.

In the heat medium circuit, a heat medium is circulated. The powertrain device is an electrical device for generating driving power for a vehicle. The power train device is arranged to be cooled by the heat medium. The radiator is configured to perform first heat exchange between the heat medium and outside air. The chiller is configured to perform second heat exchange between a low-pressure refrigerant and the heat medium.

The circuit switching unit is configured to switch the heat medium circuit between (i) a first circulation state in which the heat medium is circulated between the powertrain device and the radiator and (ii) a second circulation state in which the heat medium is circulated between the powertrain device and the chiller.

The circuit switching determiner is configured to determine whether a temperature of the powertrain device is higher than a predetermined threshold in the first circulation state, and determine that the heat medium circuit is switched by the circuit switching unit from the first circulation state to the second circulation state upon determining that the temperature of the powertrain device is higher than the predetermined threshold in the first circulation state.

The cooling switching unit is configured to switch a cooling mode of the heat medium between (i) a chiller cooling state in which the heat medium is cooled by the chiller and (ii) a chiller non-cooling state in which the heat medium is not cooled by the chiller.

The chiller cooling determiner is configured to determine a chiller cooling start timing of switching the cooling mode of the heat medium from the chiller non-cooling state to the chiller cooling state in accordance with driving-condition related information that is related to a driving condition of the vehicle.

The refrigeration cycle apparatus according to the exemplary aspect determines the cooling strategy for the powertrain device in accordance with the driving-condition related information, making it possible to efficiently cool the powertrain device.

BRIEF DESCRIPTION OF THE DRAWINGS

Other aspects of the present disclosure will become apparent from the following description of embodiments with reference to the accompanying drawings in which:

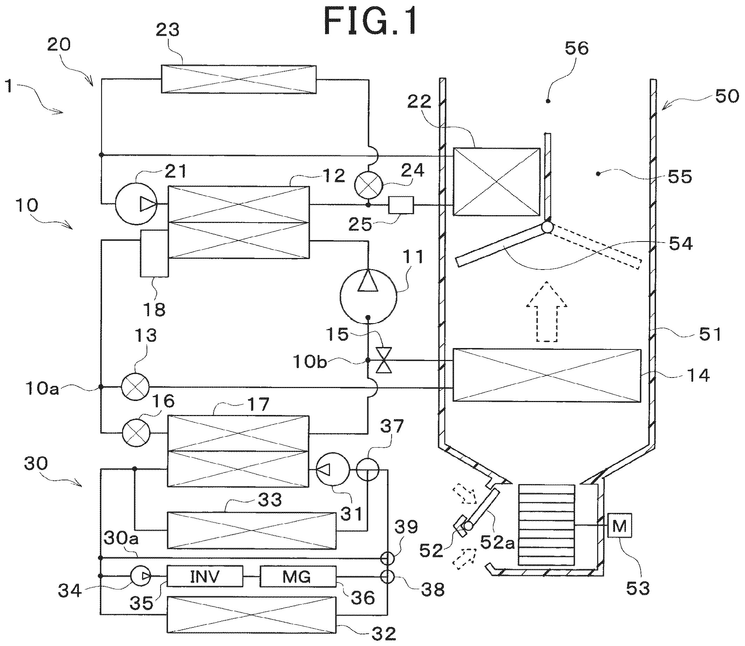

Fig. 1 is an overall structural diagram illustrating a refrigeration cycle device according to the first embodiment;
Fig. 2 is a block diagram illustrating an electric control unit of the refrigeration cycle device according to the first embodiment;
Fig. 3 is a structural diagram illustrating a low-temperature coolant circuit in a radiator dissipation mode of the refrigeration cycle device according to the first embodiment;
Fig. 4 is a structural diagram illustrating the low-temperature coolant circuit in each of the radiator dissipation mode and a chiller ON mode of the refrigeration cycle device according to the first embodiment;
Fig. 5 is a structural diagram illustrating the low-temperature coolant circuit in a chiller cooling mode of the refrigeration cycle device according to the first embodiment;
Fig. 6 is a flowchart showing a control routine to be executed by a controller of the refrigeration cycle device according to the first embodiment;
Fig. 7 is a flowchart showing an additional control routine to be executed by the controller of the refrigeration cycle device according to the first embodiment;
Fig. 8 is a timing chart illustrates an operation example of the refrigeration cycle device according to the first embodiment;
Fig. 9 is a flowchart showing a control routine to be executed by a controller of a refrigeration cycle device according to the second embodiment;
Fig. 10 is a flowchart showing a control routine to be executed by a controller of a refrigeration cycle device according to the third embodiment;
Fig. 11 is a timing chart illustrates an operation example of the refrigeration cycle device according to the third embodiment;
Fig. 12 is a flowchart showing a control routine to be executed by a controller of a refrigeration cycle device according to the fourth embodiment;
Fig. 13 is a timing chart illustrates an operation example of the refrigeration cycle device according to the fourth embodiment;
Fig. 14 is a flowchart showing a control routine to be executed by a controller of a refrigeration cycle device according to the fifth embodiment;
Fig. 15 is a graph illustrating an operation example of the refrigeration cycle device according to the fifth embodiment; and
Fig. 16 is an overall structural diagram illustrating a refrigeration cycle device according to the sixth embodiment.

DETAILED DESCRIPTION OF EMBODIMENTS

First embodiment

The following describes the first embodiment with reference to the accompanying drawings.

A refrigeration cycle device 10 according to the first embodiment is applied to a vehicular air conditioner 1 installed in a vehicle, such as an electric vehicle or a hybrid vehicle. Electric vehicles are configured to acquire drive power from an electric motor for traveling. Hybrid vehicles are configured to acquire drive power from an internal combustion engine and/or a traveling electric motor.

The vehicular air conditioner 1 is an air conditioner with a batterytemperature adjustment function. Specifically, the vehicular air conditioner 1 is configured to perform air-conditioning of a space, i.e., an air-conditioning target space, in the cabin of the vehicle, and adjust the temperature of each of a battery 33, an inverter 35, and a motor-generator 36. Thus, air, the battery 33, the inverter 35, and the motor-generator 36 constitute cooled targets of the refrigeration cycle device 10.

The battery 33 is a secondary battery that stores power to be supplied to various devices installed in the vehicle, such as one or more electric motors. The first embodiment, for example, uses a lithium ion battery as the battery 33. The battery 33 is configured as a battery pack comprised of unillustrated multiple battery cells that are stacked; the battery cells are electrically connected to be series or parallel to one another.

The inverter 35 serves as a power converter that converts direct-current (DC) power supplied from the battery 33 into alternating-current (AC) power, thus outputting the AC power to the motor-generator 36. The motor-generator 36 is configured to generate drive power based on AC power outputted from the inverter 35, and generate regenerative electric power when the vehicle is decelerating or descending a hill.

Each of the inverter 35 and the motor-generator 36 is an electrical device, i.e., a power-train device, for generating driving power for the vehicle, and generates heat as a product of its operation.

One or more devices, such as a DC-DC converter and a battery charger, included in the power-train devices may be used as targets to be cooled by the refrigeration cycle device 10. The DC-DC converter is configured to convert the DC power with a high voltage supplied from the battery 33 into DC power with a lower voltage, and supply the DC power with the lower voltage to auxiliary devices installed in the vehicle. The battery charger is used to charge the battery 33 using an external power supply.

In the vehicular air conditioner 1, cooling energy generated by the refrigeration cycle device 10 is capable of cooling the battery 33, the inverter 35, and the motor-generator 36.

The refrigeration cycle device 10 is configured as a vapor compression refrigerator that includes a compressor 11, a condenser 12, a first expansion valve 13, an air-cooling evaporator 14, a constant pressure valve 15, a second expansion valve 16, a chiller 17, and a receiver 18. In particular, the refrigeration cycle device 10 according to the first embodiment is configured as a subcritical refrigeration cycle in which the pressure of a high-pressure side refrigerant does not exceed the critical pressure of the refrigerant, using a fluorocarbon refrigerant as the refrigerant. The refrigerant contains refrigeration oil (specifically, PAG oil) for lubricating the compressor 11. A portion of the refrigeration oil is circulated through the refrigeration cycle together with the refrigerant.

The compressor 11 is an electric compressor driven by the power supplied from the battery 33. The compressor 11 is configured to draw the refrigerant in the refrigeration cycle device 10, compresses the refrigerant, and thereafter discharge the compressed refrigerant. The compressor 11 may be a variable displacement compressor driven by a belt.

The condenser 12 is a high-pressure side refrigerant to heat medium heat exchanger that exchanges heat between the high-pressure side refrigerant discharged from the compressor 11 and a coolant in a high-temperature coolant circuit 20 to thereby condense the high-pressure side refrigerant.

The coolant in the high-temperature coolant circuit 20 is a fluid as a heat medium. In particular, the coolant in the high-temperature coolant circuit 20 serves as a high-temperature heat medium. The coolant suitable for use in the high-temperature coolant circuit 20 according to the first embodiment includes an anti-freeze fluid or a liquid containing at least ethylene glycol, dimethylpolysiloxane, or a nanofluid. The high-temperature coolant circuit 20 serves as a high-temperature heat medium circuit in which the high-temperature heat medium is circulated.

The receiver 18 is configured to separate the gas-liquid mixture of the refrigerant discharged from the condenser 12, discharges the liquid-phase refrigerant downstream, and stores excess refrigerant in the cycle. The flow of the liquid-phase refrigerant discharged from the receiver 18 is branched at a branching section 10a.

The first expansion valve 13 serves as a first decompressor that decompresses and expands the liquid-phase refrigerant discharged from the condenser 12. The first expansion valve 13 is configured as an electric variable throttle mechanism and includes a valve body and an electric actuator. The valve body is configured to be capable of changing a passage opening, in other words, a throttle opening, of the refrigerant passage. The electric actuator has a stepping motor that changes the throttle opening of the valve body.

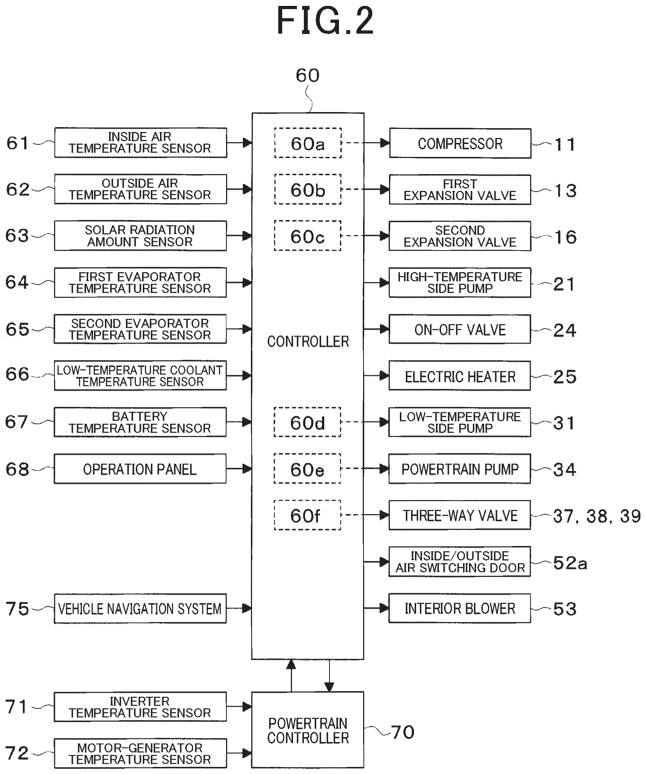

The first expansion valve 13 is comprised of a variable throttle mechanism with the fully closing function of fully closing the refrigerant passage. A controller 60 illustrated in Fig. 2 is configured to output control signals to the first expansion valve 13 to accordingly control the operation of the first expansion valve 13.

The first evaporator 14 is a refrigerant to air heat exchanger that exchanges heat between the refrigerant discharged from the first expansion valve 13 and air to be blown into the cabin of the vehicle to evaporate the refrigerant, thus cooling the air to be blown into the cabin of the vehicle. That is, the first evaporator 14, which serves as a first evaporating unit, is configured to evaporate the refrigerant to thereby cool the air.

The constant pressure valve 15 serves as a pressure adjuster, in other words, a pressure adjustment decompressor for maintaining the pressure of the refrigerant at the outlet side of the first evaporator 14 within a predetermined pressure range. The constant pressure valve 15 is configured to maintain the pressure, in other words, the temperature, of the refrigerant in the first evaporator 14 to be higher than or equal to a predetermined value to accordingly suppress frost formation on the first evaporator 14.

Specifically, the constant pressure valve 15 is comprised of a mechanical variable throttle mechanism. That is, the constant pressure valve 15 is configured to decrease the passage area, i.e., throttle opening, of the refrigerant passage when the pressure of the refrigerant at the outlet side of the first evaporator 14 falls below the predetermined value, and increase the passage area, i.e., throttle opening, of the refrigerant passage when the pressure of the refrigerant at the outlet side of the first evaporator 14 exceeds the predetermined value.

In place of the constant pressure valve 15, a fixing throttle, such as an orifice or a capillary tube, may be used when the flow rate of the refrigerant circulating in the cycle varies little.

The second expansion valve 16 and the chiller 17 are arranged in parallel with the first expansion valve 13, the first evaporator 14, and the constant pressure valve 15 in terms of the refrigerant flow path.

The second expansion valve 16 serves as a second decompressor that decompresses and expands the liquid-phase refrigerant discharged from the condenser 12. The second expansion valve 16 is configured as an electric variable throttle mechanism and includes a valve body and an electric actuator. The valve body is configured to be capable of adjusting a passage opening (i.e., throttle opening) of the refrigerant passage. The electric actuator has a stepping motor that changes the throttle opening of the valve body.

The second expansion valve 16 is comprised of a variable throttle mechanism with the fully closing function of fully closing the refrigerant passage. That is, the second expansion valve 16 is configured to be capable of shutting off the flow of the refrigerant by fully closing the refrigerant passage. The controller 60 is configured to output control signals to the second expansion valve 16 to accordingly control the operation of the second expansion valve 16.

The chiller 17 serves as a second evaporator that exchanges heat between the refrigerant discharged from the second expansion valve 16 and a coolant in a low-temperature coolant circuit 30 to evaporate the refrigerant, thus cooling the coolant. The chiller 17, which serves as a second evaporation unit, is a low-pressure side refrigerant to heat medium heat exchanger.

The gas-phase refrigerant evaporated in the chiller 17 merges with the refrigerant discharged from the constant pressure valve 15 at a predetermined junction 10b, and thereafter is drawn into the compressor 11 so as to be compressed by the compressor 11.

The coolant in the low-temperature coolant circuit 30 is a fluid as a heat medium. In particular, the coolant in the low-temperature coolant circuit 30 serves as a low-temperature heat medium. The coolant suitable for use in the low-temperature coolant circuit 30 according to the first embodiment includes an anti-freeze fluid or a liquid containing at least ethylene glycol, dimethylpolysiloxane, or a nanofluid. The low-temperature coolant circuit 30 serves as a low-temperature heat medium circuit in which the low-temperature heat medium is circulated.

The condenser 12, a high-temperature side pump 21, a heater core 22, a high-temperature side radiator 23, an on-off valve 24, and an electric heater 25 are disposed in the high-temperature coolant circuit 20.

The high-temperature side pump 21 is a heat medium pump, such as an electric pump, that draws and discharges the coolant. The high-temperature side pump 21 serves as a high-temperature side flow-rate adjuster for adjusting the flow rate of the coolant circulating in the high-temperature coolant circuit 20.

The heater core 22 is an air-heating heat exchanger that exchanges heat between the coolant in the high-temperature coolant circuit 20 and the air to be blown into the cabin of the vehicle to thereby heat the air to be blown into the cabin of the vehicle. In the heater core 22, the coolant dissipates its heat into the air to be blown into the cabin of the vehicle. The condenser 12, the high-temperature coolant circuit 20, and the heater core 22 serve as a heat dissipation unit that exchanges heat between the refrigerant discharged from the compressor 11 and the air to be blown into the cabin of the vehicle to thereby dissipate heat into the air to be blown into the cabin of the vehicle.

The high-temperature side radiator 23 serves as a high-temperature heat medium to outside air heat exchanger for exchanging heat between the coolant in the high-temperature coolant circuit 20 and the outside air. The high-temperature side radiator 23 and the on-off valve 24 are arranged in parallel with the heater core 22 in terms of the high-temperature side coolant.

The on-off valve 24 is a solenoid valve that opens or closes a radiator-side flow passage. The controller 60 is configured to control the operation of the on-off valve 24. The on-off valve 24 serves as a high-temperature switching portion that switches the flow of the coolant in the high-temperature coolant circuit 20.

The on-off valve 24 may be a thermostat. The thermostat is a coolant thermo-sensitive valve that has a mechanical mechanism with a valve body. That is, the mechanical mechanism of the on-off valve 24 is configured to displace the valve body using thermowax, which changes its volume depending on the temperature, to thereby open or close the coolant flow passage.

The electric heater 25 serves as an auxiliary heating unit that provides auxiliary heating of the coolant in the high-temperature coolant circuit 20. The electric heater 25 is an auxiliary heat source for assisting heating of the air by the heater core 22. A PTC (Positive Temperature Coefficient) heater that generates heat when electric power is applied thereto. The electric heater 25 serves as a Joule heat generator for generating Joule heat. The controller 60 is configured to output a control voltage to the electric heater 25 to accordingly control the amount of heat generated by the electric heater 25.

The chiller 17, a low-temperature side pump 31, a low-temperature side radiator 32, the battery 33, a powertrain pump 34, the inverter 35, the motor-generator 36, a battery three-way valve 37, a powertrain three-way valve 38, and a bypass three-way valve 39 are disposed in the low-temperature coolant circuit 30.

The low-temperature side pump 31 is a heat medium pump that draws and discharges the coolant. In addition, the low-temperature side pump 31, which is an electric pump, serves as a low-temperature side flow rate adjuster that adjusts the flow rate of the coolant circulating in the low-temperature coolant circuit 30.

The low-temperature side radiator 32 serves as a low-temperature heat medium to outside air heat exchanger for exchanging heat between the coolant in the low-temperature coolant circuit 30 and the outside air.

The battery 33 is one of the devices installed in the vehicle, and a device that generates heat as a product of its operation. The battery 33 is configured to dissipate waste heat produced by its operation into the coolant in the low-temperature coolant circuit 30. In other words, the battery 33 is configured to supply heat to the coolant in the low-temperature coolant circuit 30.

The powertrain pump 34 is a heat medium pump that draws the coolant and discharges the coolant to thereby circulate the coolant through the inverter 35 and the motor-generator 36 that are the powertrain devices.

The low-temperature side radiator 32, the battery 33, and the set of the inverter 35 and the motor-generator 36, and a bypass passage 30a are arranged to be parallel with one another with respect to the flow of the coolant. The battery three-way valve 37, the powertrain three-way valve 38, and the bypass three-way valve 39 serve as a heat-medium flow switching unit for switching the flow of the coolant in the low-temperature coolant circuit 30.

The battery three-way valve 37 is configured to switch the flow of the coolant to the battery 33. The powertrain three-way valve 38 is configured to switch the flow of the coolant to the set of the inverter 35 and the motor-generator 36. The bypass three-way valve 39 is configured to switch the flow of the coolant to the bypass passage 30a.

The controller 60 is configured to control the operation of each of the battery three-way valve 37, the powertrain three-way valve 38, and the bypass three-way valve 39.

The air-cooling evaporator 14 and the heater core 22 are accommodated in a casing 51 of an interior air conditioning unit 50, which will be referred to as an air conditioning casing. The interior air conditioning unit 50 is disposed inside an unillustrated dashboard at a front space of the cabin of the vehicle. The air conditioning casing 51 serves as an air passage definition member that defines therein an air passage.

The heater core 22 is disposed at the downstream side of the air flow with respect to the air-cooling evaporator 14 in the air flow passage in the air conditioning casing 51. An inside/outside air switching case 52 and an interior blower 53 are disposed in the air conditioning casing 51. The inside/outside air switching case 52 includes an inside/outside air switching door 52a. The inside/outside air switching door 52a serves as an inside/outside air switching member that switches between the inside air and the outside air to introduce the switched air into the air passage of the air conditioning casing 51. In other words, the inside/outside air switching door 52a serves as an inside/outside air adjuster for adjusting the ratio of one of the inside air and the outside air introduced into the air passage of the air conditioning casing 51 to the other thereof.

The interior blower 53 is configured to draw and blow the inside air and/or the outside air introduced into the air passage of the air conditioning casing 51 through the inside/outside air switching case 52. The controller 60 is configured to control the operation of each of the inside/outside air switching door 52a and the interior blower 53.

An air mix door 54 is disposed between the first evaporator 14 and the heater core 22 in the air passage of the air conditioning casing 51. The air mix door 54 is configured to adjust the air volume ratio between a first part and a remaining second part of the cold air that has passed through the first evaporator 14; the first part of the cold air flows into the heater core 22 and the remaining second part of the cold air flows through a cold air bypass passage 55.

The cold air bypass passage 55 is an air passage through which the cold air having passed through the air-cooling evaporator 14 flows while bypassing the heater core 22.

The air mix door 54 is a rotary door that has a rotary shaft rotatably supported by the air conditioning casing 51 and a door base portion coupled to the rotary shaft. Adjustment of the opening position of the air mix door 54 enables the temperature of the conditioned air blown out from the air conditioning casing 51 into the cabin of the vehicle to be adjusted to a desired temperature.

The rotary shaft of the air mix door 54 is driven by a servo motor. The controller 60 is configured to control the operation of the servo motor.

The air mix door 54 may be a sliding door that is slidable in the direction substantially orthogonal to the air flow. The sliding door may be a plate-shaped door formed of a rigid body. The sliding door may be a film door formed of a flexible film material.

The conditioned air whose temperature has adjusted by the air mix door 54 is blown out from an air outlet 56 formed in the air conditioning casing 51 into the cabin of the vehicle.

The controller 60 illustrated in Fig. 2 includes a well-known microcomputer and its peripheral circuits; the microcomputer is comprised of a CPU, a ROM, a RAM, and/or other peripheral units. The controller 60 is configured to perform various operations and/or processes in accordance with control programs stored in the ROM. Various control target devices are connected to the output of the controller 60. The controller 60 serves as a control unit that controls the operation of each of the various control target devices.

The control target devices to be controlled by the controller 60 include, for example, the compressor 11, the first expansion valve 13, the second expansion valve 16, the high-temperature side pump 21, the on-off valve 24, the electric heater 25, the low-temperature side pump 31, the powertrain pump 34, the battery three-way valve 37, the powertrain three-way valve 38, the bypass three-way valve 39, the inside/outside air switching door 52a, and the interior blower 53.

The controller 60 includes a refrigerant discharge capacity control unit 60a, which is implemented by hardware and/or software, configured to control the electric motor of the compressor 11.

The controller 60 includes a first throttle control unit 60b, which is implemented by hardware and/or software, configured to control the first expansion valve 13.

The controller 60 includes a second throttle control unit 60c, which is implemented by hardware and/or software, configured to control the second expansion valve 16. In particular, the second throttle control unit 60c serves as a cooling state switching unit that switches a cooling mode of the coolant between a chiller cooling state in which the coolant is cooled by the chiller 17 and a chiller non-cooling state in which the coolant is not cooled by the chiller 17.

The controller 60 includes a high-temperature heat medium flow-rate control unit, which is implemented by hardware and/or software, configured to control the high-temperature side pump 21.

The controller 60 includes an on-off valve control unit, which is implemented by hardware and/or software, configured to control the on-off valve 24.

The controller 60 includes an auxiliary heating control unit, which is implemented by hardware and/or software, configured to control the electric heater 25.

The controller 60 includes a first heat medium flow-rate control unit 60d, which is implemented by hardware and/or software, configured to control the low-temperature side pump 21.

The controller 60 includes a second heat medium flow-rate control unit 60e, which is implemented by hardware and/or software, configured to control the powertrain pump 34.

The controller 60 includes a heat medium flow-rate control unit 60f, which is implemented by hardware and/or software, configured to control each of the battery three-way valve 37, the powertrain three-way valve 38, and the bypass three-way valve 39. The heat medium flow-rate control unit 60f serves as a circuit switching determiner configured to determine the switching condition of the coolant circulation state in the low-temperature coolant circuit 30.

A group of various control sensors is connected to the input side of the controller 60. The control sensor group includes, for example, an inside air temperature sensor 61, an outside air temperature sensor 62, a solar radiation amount sensor 63, a first evaporator temperature sensor 64, a second evaporator temperature sensor 65, a low-temperature coolant temperature sensor 66, and a battery temperature sensor 67.

The inside air temperature sensor 61 is configured to measure a cabin interior temperature Tr. The outside air temperature sensor 62 is configured to measure an outside air temperature Tam. The solar radiation amount sensor 63 is configured to measure a solar radiation amount As inside the cabin of the vehicle.

The first evaporator temperature sensor 64 serves as a temperature measuring unit that measures a temperature of the first evaporator 14 as a first evaporator temperature TE1. As the first evaporator temperature sensor 64, a fin thermistor for measuring a temperature of heat exchange fins in the first evaporator 14 or a refrigerant temperature sensor for measuring a temperature of the refrigerant flowing through the first evaporator 14 may be for example used.

The second evaporator temperature sensor 65 serves as a temperature measuring unit that measures a temperature of the chiller 17 as a second evaporator temperature TE2. As the second evaporator temperature sensor 65, a refrigerant temperature sensor for measuring a temperature of the refrigerant flowing through the chiller 17 may be for example used.

The low-temperature coolant temperature sensor 66 serves as a temperature measuring unit that measures a temperature of the coolant in the low-temperature coolant circuit 30. For example, the low-temperature coolant temperature sensor 66 is configured to measure a temperature of the coolant in the chiller 17.

The battery temperature sensor 67 serves as a battery temperature measuring unit that measures a temperature TB of the battery 33. The battery temperature sensor 67 is preferably comprised of a plurality of temperature sensors for measuring temperatures of respective plural portions of the battery 33.

Various operation switches are connected to the input side of the controller 60. The operation switches are mounted to an operation panel 68 and operable by one or more occupants of the vehicle. The operation panel 68 is disposed near the dashboard at the front space of the cabin of the vehicle. The controller 60 is configured to receive an operation signal input from each of the operation switches.

The various operation switches include a driving mode setting switch, an air conditioner switch, a temperature setting switch, and the other switches. The traveling mode setting switch is to selectably switch the driving mode of the vehicle among Eco mode, Normal mode, and Sport mode.

Eco mode is a driving mode in which energy efficiency is prioritized, and the output of the motor-generator 36 is moderately limited.

Sport mode is a performance-oriented driving mode in which the output of the motor-generator 36 is not restricted for the sake of energy saving.

Normal mode provides a balance between Eco and Sport modes.

The air conditioner switch is to set whether the interior air conditioning unit performs cooling of the air in the cabin of the vehicle. The temperature setting switch is to set the temperature in the cabin of the vehicle.

A powertrain controller 70 is connected to the input side and output side of the controller 60. The powertrain controller 70 serves as a control unit for controlling the powertrain devices, i.e., the inverter 35 and the motor-generator 36.

The powertrain controller 70 is configured to output a requested output value for the motor-generator 36 to the controller 60. An inverter temperature sensor 71 and a motor-generator temperature sensor 72 are connected to the input side of the powertrain controller 70.

The inverter temperature sensor 71 serves as one of powertrain-device temperature measuring units for measuring the temperature of the inverter 35. The motor-generator temperature sensor 72 serves as one of the powertrain-device temperature measuring units for measuring the temperature of the motor-generator 36.

Measurement signals from the inverter temperature sensor 71 and the motor-generator temperature sensor 72 are input to the controller 60 through the powertrain controller 70.

A vehicle navigation system 75 is connected to the input side of the controller 60. Information on maps and/or traffic-jam information are input from the vehicle navigation system 75 to the controller 60.

The requested output value for the motor-generator 36, the temperature of the inverter 35, the temperature of the motor-generator 36, the map information, the traffic-jam information, and other information included in all information manipulated by the controller 60 refer to as driving-condition related information that is related to the driving conditions of the vehicle.

Next, the following describes operations of the vehicular air conditioner 1 configured set forth above.

First, the following schematically describes air-conditioning related operations of the vehicular air conditioner 1.

The controller 60 determines the operating state of each of various control target devices connected to the controller 60 in accordance with, for example, a target air-outlet temperature TAO and the measurement signals output from the sensor group. In other words, the controller 60 determines a control signal to be output to each control device in order to achieve the corresponding operating state.

The air-outlet temperature TAO refers to a target temperature for the blowing air to be blown into the cabin of the vehicle. The controller 60 calculates the target air outlet temperature TAO in accordance with the following formula [F1]:

$$TAO = Kset \times Tset - Kr \times Tr - Kam \times Tam - Ks \times As + C \qquad [F1]$$

where:

Tset refers to a cabin interior preset temperature that is set by the temperature setting switch on the operation panel 70;
Tr refers to the cabin interior temperature measured by the inside air temperature sensor 61;
Tam refers to the outside air temperature measured by the outside air temperature sensor 62; and
As refers to the amount of solar radiation measured by the solar radiation amount sensor 63.

Kset, Kr, Kam, and Ks are control gains, and C is a constant for correction.

The controller 60 determines a control signal to be output to the compressor 11, which corresponds, for example, to a target rotation speed, based on the deviation between the target temperature TEO and the temperature TE1 of the first evaporator 14, using a feedback control method, such that the temperature TE1 of the first evaporator 14 approaches the target temperature TEO.

A control map stored in the controller 60 represents a relationship between the target air-output temperature TAO and the target temperature TE such that the target temperature TE increases with an increase in the target air-output temperature TAO. Then, the controller 60 refers to the control map using a value of the target air-outlet temperature TAO to accordingly determine the target temperature TEO.

The conditions of the refrigerant circulating through the refrigeration cycle of the refrigeration cycle device 10 that operates in an air-conditioning mode vary as follows:

The high-pressure refrigerant discharged from the compressor 11 flows into the condenser 12. The refrigerant in the condenser 12 dissipates heat therefrom into the coolant in the high-temperature coolant circuit 20. This results in the refrigerant in the condenser 12 being cooled to be condensed.

The refrigerant flowing out of the condenser 12 flows into the first expansion valve 13 and is then decompressed and expanded in the first expansion valve 13 to become a low-pressure refrigerant. The low-pressure refrigerant decompressed in the first expansion valve 13 flows into the first evaporator 14 and absorbs heat from the air to be blown into the cabin of the vehicle to evaporate therein. This results in the air to be blown into the cabin of the vehicle being cooled.

The refrigerant flowing out of the first evaporator 14 flows into the compressor 11 and is then compressed by the compressor 11 again.

The coolant in the high-temperature coolant circuit 20, from which heat was dissipated therefrom by the refrigerant in the condenser 12, is circulated through the heater core 22. In the heater core 22, the air cooled by the first evaporator 14 is heated by the coolant in the high-temperature coolant circuit 20.

As described above, the vehicular air conditioner 1 is configured such that the low-pressure refrigerant dissipates heat from the air in the first evaporator 14 to thereby cool the air, and the heater core 22 enables the cooled air to be heated therein, and thereafter the heated air is blown out into the cabin of the vehicle. This therefore achieves air conditioning in the cabin of the vehicle.

Next, the following describes operations of the vehicular air conditioner 1 related to cooling of the inverter 35 and the motor-generator 36.

The controller 60 selectively switches the operation mode of the refrigeration cycle device 10 to one of a chiller ON mode and a chiller OFF mode.

In the chiller ON mode, the second expansion valve 16 is set to a throttled (narrow) opening, the low-pressure refrigerant, which has been decompressed and expanded in the second evaporator 16, flows into the chiller 17, so that the coolant in the low-temperature coolant circuit 30 is cooled in the chiller 17.

In contrast, in the chiller OFF mode, the second expansion valve 16 is set to be fully closed, no refrigerant flows into the chiller 17, so that no cooing of the coolant in the low-temperature coolant circuit 30 is carried out in the chiller 17.

The controller 60 selectively switches the circulation mode of the coolant in the low-temperature coolant circuit 30 with respect to the inverter 35 and motor-generator 36 to one of a radiator dissipation mode and a chiller cooling mode.

The radiator dissipation mode represents a first circulation state of the coolant in the low-temperature coolant circuit 30, and the chiller cooling mode represents a second circulation state of the coolant in the low-temperature coolant circuit 30. .

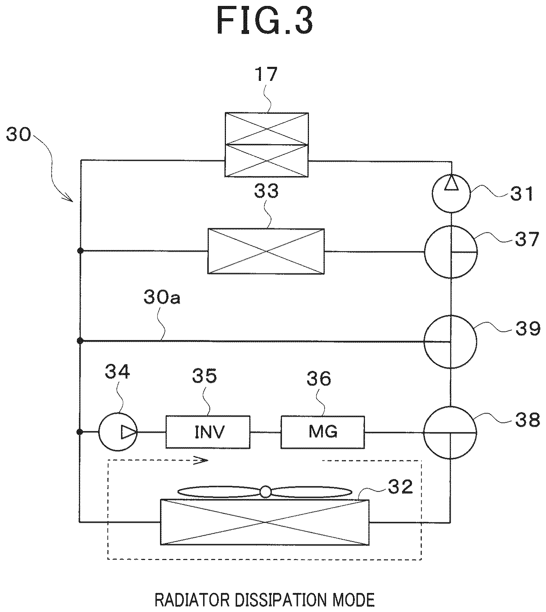

In the radiator dissipation mode, the controller 60 activates the powertrain pump 34, and controls the powertrain three-way valve 38 such that the coolant in the low-temperature coolant circuit 30 is circulated between the low-temperature side radiator 32 and the set of the inverter 35 and motor-generator 36 as indicated by the dashed arrow in Fig. 3. This results in heat wasted from the inverter 35 and motor-generator 36 being received in the low-temperature radiator 32 and thereafter dissipated by the low-temperature radiator 32 into the outside air.

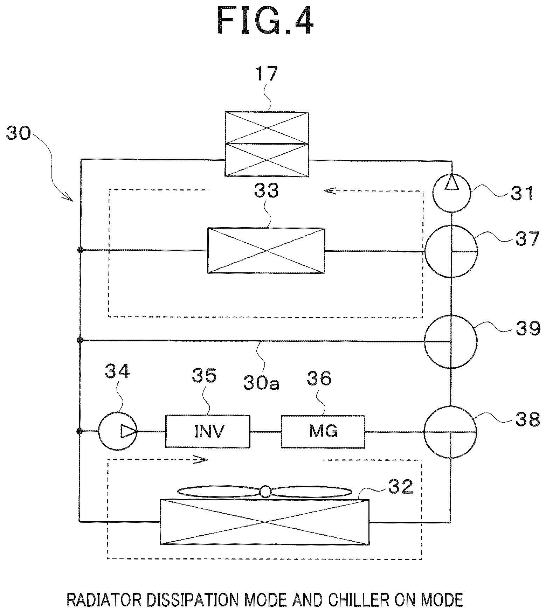

In particular, in the radiator dissipation mode with the operation mode of the refrigeration cycle device 10 set to the chiller ON mode, the controller 60 activates the low-temperature side pump 31, and controls the bypass three-way valve 39 such that the coolant in the low-temperature coolant circuit 30 is circulated between the chiller 17 and the bypass passage 30a as indicated by the dashed arrow in Fig. 4. This results in the temperature of the coolant, which is circulated between the chiller 17 and the bypass passage 30a, decreasing.

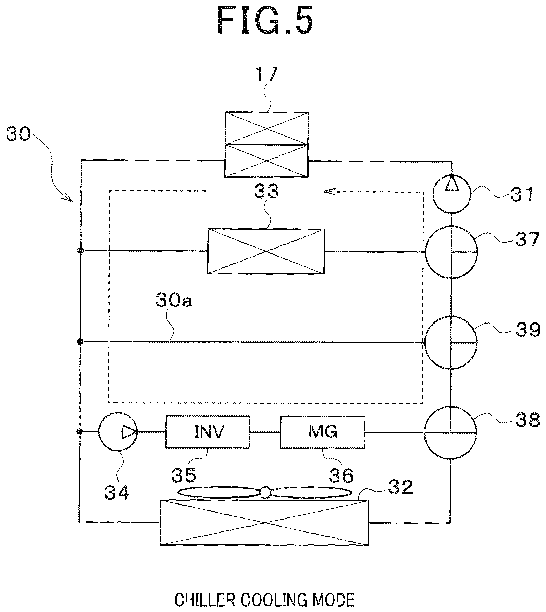

In the operation mode of the refrigeration cycle device 10 set to the chiller cooling mode, the controller 60 activates at least one of the low-temperature side pump 31 and the powertrain pump 34, and controls the powertrain three-way valve 38 such that the coolant in the low-temperature coolant circuit 30 is circulated between the chiller 17 and the set of the inverter 35 and motor-generator 36 as indicated by the dashed arrow in Fig. 5. This results in heat wasted from the inverter 35 and motor-generator 36 being absorbed in the refrigerant of the refrigeration cycle device 10, which is located in the chiller 17.

The refrigeration cycle device 10, which operates in the chiller cooling mode, cools the inverter 35 and the motor-generator 36, resulting in the refrigeration cycle device 10 having a higher cooling performance with respect to the inverter 35 and the motor-generator 36 as compared with the refrigeration cycle device 10 operating in the radiator dissipation mode; heat wasted from the inverter 35 and the motor-generator 36 is dissipated into the outside air in the radiator dissipation mode.

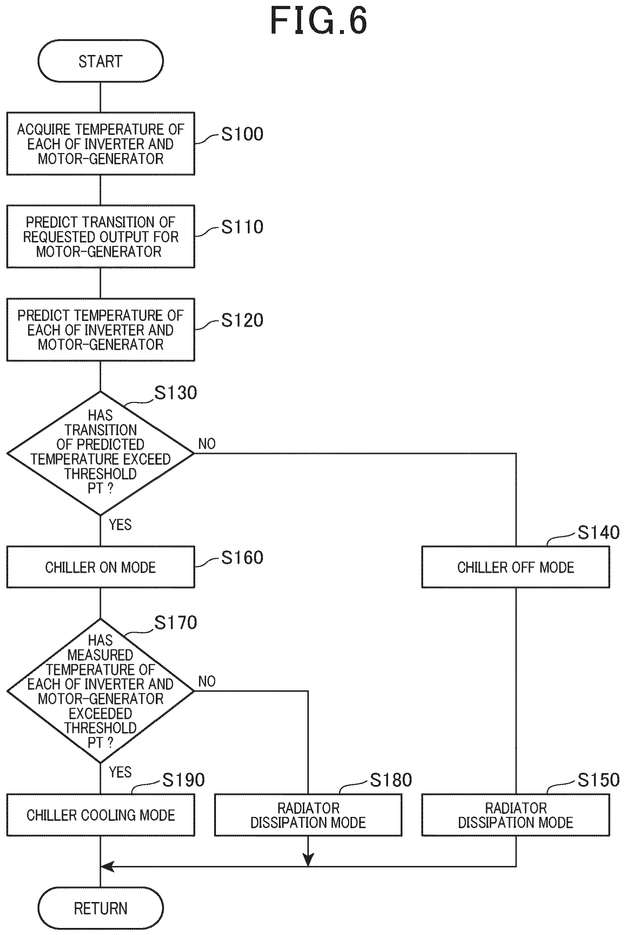

Fig. 6 is a flowchart showing a control routine to be executed every predetermined period by the controller 60.

When starting the control routine, the controller 60 acquires the temperature of the inverter 35 measured by the inverter temperature sensor 71 and the temperature of the motor-generator 36 measured by the motor-generator temperature sensor 72 in step S100.

Next, the controller 60 predicts the transition of the requested output for the motor-generator 36 in accordance with, for example, the information on the maps and the traffic-jam information input from the vehicle navigation system 75 in step S110.

For example, when recognizing, based on the map information and the traffic-jam information, that the vehicle is scheduled to travel on a road with a high speed limit, such as a highway, the controller 60 predicts that the requested output for the motor-generator 36 will fluctuate within a high-speed range. In contrast, when recognizing, based on the map information and the traffic-jam information, that the vehicle is scheduled to travel on a traffic-jam road, the controller 60 predicts that the requested output for the motor-generator 36 will fluctuate within a low-speed range. The prediction of the transition of the requested output for the motor-generator 36 may be carried out before running of the vehicle or updated during running of the vehicle.

Next, the controller 60 predicts the transition of the temperature of each of the inverter 35 and the motor-generator 36 in accordance with the predicted transition of the requested output for the motor-generator 36 in step S120.

For example, the controller 60 predicts that the temperature of each of the inverter 35 and the motor-generator 36 will increase with an increase in the requested output for the motor-generator 36 that has been predicted.

Following the operation in step S120, the controller 60 determines whether the transition of each of the temperature of the inverter 35 and the temperature of the motor-generator 36 predicted in step S110 has exceeded a corresponding one of predetermined thresholds PT in step S130. The predetermined threshold PT for each of the inverter 35 and the motor-generator 36 is defined as a temperature of the corresponding one of the inverter 35 and the motor-generator 36 at which the cooling performance based on the radiator dissipation mode is insufficient to cool the corresponding one of the inverter 35 and the motor-generator 36.

In response to determination that the transition of each of the temperature of the inverter 35 and the temperature of the motor-generator 36 predicted in step S110 has not exceeded the corresponding one of the predetermined thresholds PT (NO in step S130), the control routine proceeds to step S140. In step S140, the controller 60 sets the operation mode of the refrigeration cycle device 10 to the chiller OFF mode, and sets the circulation mode of the low-temperature coolant circuit 30 to the radiator dissipation mode in step S150. This results in, as illustrated in Fig. 3, heat wasted from the inverter 35 and motor-generator 36 being received in the low-temperature radiator 32 and thereafter dissipated by the low-temperature radiator 32 into the outside air.

Otherwise, in response to determination that the transition of at least one of the temperature of the inverter 35 and the temperature of the motor-generator 36 predicted in step S110 has exceeded the corresponding at least one of the predetermined thresholds PT at a point of time (YES in step S130), the control routine proceeds to step S160. In step S160, the controller 60 sets, at the point of time, the operation mode of the refrigeration cycle device 10 to the chiller ON mode. This results in, as illustrated in Fig. 4, the coolant in the low-temperature coolant circuit 30 being cooled in the chiller 17.

Following the operation in step S160, the controller 60 performs a determination process of determining whether each of the temperature of the inverter 35 measured by the inverter temperature sensor 71 and the temperature of the motor-generator 36 measured by the motor-generator temperature sensor 72 has exceeded the corresponding one of the predetermined thresholds PT in step S170. The determination process is repeatedly executed to follow the changes in the temperature conditions of the inverter 35 and the motor-generator 36.

In response to determination that each of the temperature of the inverter 35 measured by the inverter temperature sensor 71 and the temperature of the motor-generator 36 measured by the motor-generator temperature sensor 72 has not exceeded the corresponding one of the predetermined thresholds PT (NO in step S170), the control routine proceeds to step S180. In step S180, the controller 60 sets the circulation mode of the low-temperature coolant circuit 30 to the radiator dissipation mode. This results in, as illustrated in Fig. 4, heat wasted from the inverter 35 and motor-generator 36 being received in the low-temperature radiator 32 and thereafter dissipated by the low-temperature radiator 32 into the outside air.

In contrast, in response to determination that the temperature of at least one of the inverter 35 and the motor-generator 36 measured by the corresponding at least one of the inverter temperature sensor 71 and the motor-generator temperature sensor 72 has exceeded the corresponding at least one of the predetermined thresholds PT (YES in step S170), the control routine proceeds to step S190. In step S190, the controller 60 sets the circulation mode of the low-temperature coolant circuit 30 to the chiller cooling mode. This results in, as illustrated in Fig. 5, heat wasted from the inverter 35 and motor-generator 36 being cooled by the refrigerant of the refrigeration cycle device 10, which is located in the chiller 17.

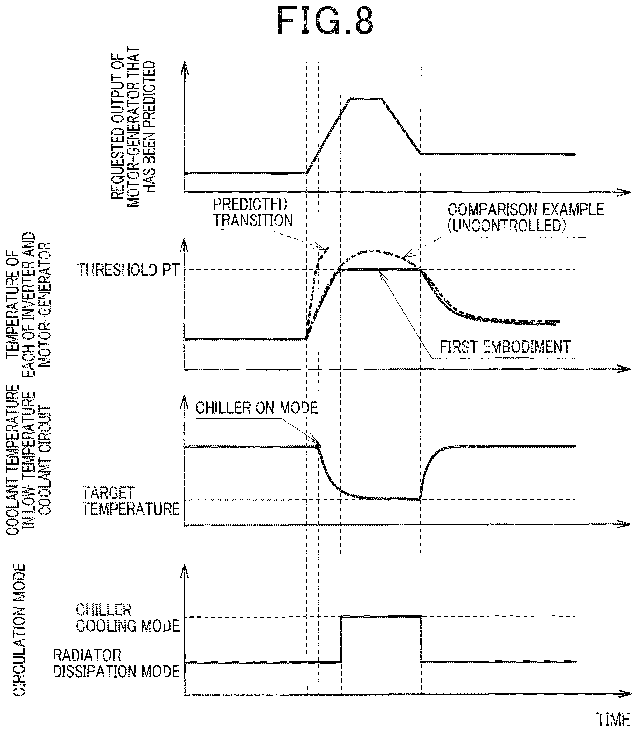

As described above, the control routine illustrated in Fig. 6 performs (i) switching control between the chiller ON mode and the chiller OFF mode and (ii) switching control between the radiator dissipation mode and the chiller cooling mode in accordance with the motor-generator output prediction and the temperature conditions that vary during running of the vehicle (see Fig. 8).

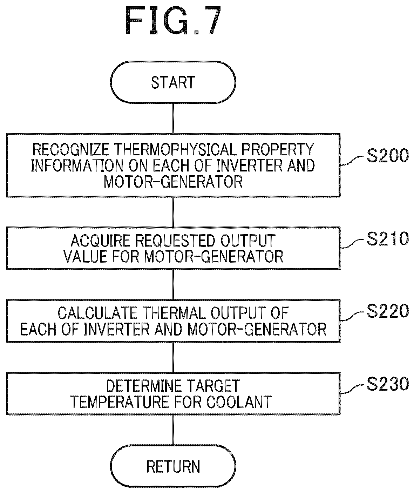

In the operation mode of the refrigeration cycle device 10 set to the chiller ON mode, the controller 60 controls the second evaporator 16 to thereby cause the temperature of the coolant in the low-temperature coolant circuit 30 to approach the target temperature. In particular, the controller 60 determines the target temperature in accordance with a control routine illustrated in Fig. 7.

The controller 60 recognizes thermophysical property information on each of the inverter 35 and the motor-generator 36 in step S200. The thermophysical property information on the inverter 35 represents information related to (i) an efficiency map indicative of the correlation between the electrical output and the thermal output of the inverter 35, (ii) the allowable upper-limit temperature of the inverter 35, and the thermal resistance of the inverter 35. The thermophysical property information on the motor-generator 36 represents information related to (i) an efficiency map indicative of the correlation between the electrical/mechanical output and the thermal output of the motor-generator 36, (ii) the allowable upper-limit temperature of the motor-generator 36, and the thermal resistance of the motor-generator 36.

Next, the controller 60 acquires, from the powertrain controller 70, the requested output value for the motor-generator 36 in step S210.

Following the operation in step S210, the controller 60 calculates the thermal output of each of the inverter 35 and the motor-generator 36 in step S220. Specifically, the controller 60 calculates, based on the requested output value for the motor-generator 36 and the efficiency map of each of the inverter 35 and the motor-generator 36 recognized in step S200, the thermal output of each of the inverter 35 and the motor-generator 36 in step S220.

Next, the controller 60

(I) Calculates, for the inverter 35, an inverter-based target temperature for the coolant in the low-temperature coolant circuit 30 in accordance with (i) the following formula [F2], (ii) the allowable upper-limit temperature of the

corresponding one of the inverter 35 and the motor-generator 36 recognized in step S200, and (iii) the thermal output of the corresponding one of the inverter 35 and the motor-generator 36 calculated in step S220; and
(II) Calculates, for the motor-generator 36, an MG-based target temperature for the coolant in the low-temperature coolant circuit 30 in accordance with (i) the following formula [F2], (ii) the allowable upper-limit temperature of the corresponding one of the inverter 35 and the motor-generator 36 recognized in step S200, and (iii) the thermal output of the corresponding one of the inverter 35 and the motor-generator 36 calculated in step S220 in step S230:

$$T_t = T_{max} - Q \times R \qquad [F2]$$

where:

Tt refers to the target temperature;
$T_{max}$ refers to the allowable upper-limit temperature;
Q refers to the thermal output; and
R refers to the thermal resistance.

Then, the controller 60 determines, based on the inverter-based target temperature for the coolant in the low-temperature coolant circuit 30 and the MG-based target temperature for the coolant in the low-temperature coolant circuit 30, the target temperature for the coolant in the low-temperature coolant circuit 30 in step S230.

Fig. 8 illustrates an operation example of the vehicular air conditioner 1 in accordance with the control routine described above.

The operation example illustrated in Fig. 8 shows that the predicted temperature of each of the inverter 35 and the motor-generator 36 increases with an increase in the requested output of the motor-generator 36 that has been predicted. The operation example illustrated in Fig. 8 shows that the predicted temperature exceeds the predetermined threshold PT at a first time, so that the operation mode of the refrigeration cycle device 10 is set to the chiller ON mode at the first time, resulting in the temperature of the coolant in the low-temperature coolant circuit 30 decreasing. The temperature of the coolant in the low-temperature coolant circuit 30 is controlled to approach the target temperature determined in step S220.

Thereafter, when the temperature, i.e., the actual temperature, of at least one of the inverter 35 and the motor-generator 36 exceeds the predetermined threshold PT at a second time, the circulation mode of the low-temperature coolant circuit 30 is switched from the radiator dissipation mode to the chiller cooling mode. This results in the refrigeration cycle device 10 having an improved cooling performance with respect to the inverter 35 and the motor-generator 36, thus maintaining the temperature of each of the inverter 35 and the motor-generator 36 to be lower than or equal to the predetermined threshold PT.

Thereafter, the predicted temperature of each of the inverter 35 and the motor-generator 36 decreases with a decrease in the requested output of the motor-generator 36. When the predicted temperature falls below the predetermined threshold PT at a third time, the operation mode of the refrigeration cycle device 10 is set to the chiller OFF mode at the second time.

When the temperature of at least one of the inverter 35 and the motor-generator 36 falls below the predetermined threshold PT at a fourth time, the circulation mode of the low-temperature coolant circuit 30 is switched from the chiller cooling mode to the radiator dissipation mode.

This results in heat wasted from the inverter 35 and motor-generator 36 being dissipated into the outside air without using the refrigeration cycle device 10, making it possible to cool the inverter 35 and the motor-generator 36 while improving energy conservation.

As shown by the operations in steps S110 to S160, the controller 60 according to the first embodiment is configured to determine the chiller cooling start timing based on the driving-condition related information. The chiller cooling start timing is defined as a timing to switch the operation mode of the refrigeration cycle device 10 from the chiller OFF mode to the chiller ON mode. The driving-condition related information includes, for example, the map information and the traffic-jam information input from the vehicle navigation system 75.

This configuration determines the cooling strategy for the inverter 35 and the motor-generator 36 in accordance with the driving-condition related information, making it possible to efficiently cool the inverter 35 and the motor-generator 36.

As seen by the operations in steps S160 to S190, the chiller cooling start timing according to the first embodiment is earlier than the timing at which the circulation mode of the low-temperature coolant circuit 30 is switched from the radiator dissipation mode to the chiller cooling mode.

This therefore enables the coolant in the low-temperature coolant circuit 30 to be cooled before cooling of the inverter 35 and the motor-generator 36, making it possible to immediately cool the inverter 35 and the motor-generator 36.

As seen by the operations in steps S130 and S140, the chiller cooling start timing according to the first embodiment is determined based on when the temperature of at least one of the inverter 35 and the motor-generator 36 predicted based on the driving-condition related information exceeds the predetermined threshold PT.

This configuration determines the chiller cooling start timing based on the predicted temperature of each of the inverter 35 and the motor-generator 36. This therefore makes it possible to cool the inverter 35 and the motor-generator 36 more immediately as compared with a case of determining the chiller cooling start timing based on the actual temperature of each of the inverter 35 and the motor-generator 36.

As seen by the operations in steps S200 to S230, the controller 60 according to the first embodiment is configured to determine the target temperature for the coolant in the low-temperature coolant circuit 30 based on the predicted temperature of each of the inverter 35 and the motor-generator 36.

This therefore makes it possible to cool the coolant in the low-temperature coolant circuit 30 toward the target temperature more immediately as compared with a case of determining the target temperature for the coolant in the low-temperature coolant circuit 30 based on the actual temperature of each of the inverter 35 and the motor-generator 36.

Second embodiment

The first embodiment is configured to set the operation mode of the refrigeration cycle device 10 to the chiller ON mode in response to determination that the predicted temperature of at least one of the inverter 35 and the motor-generator 36 has exceeded the predetermined threshold PT.

In contrast, the second embodiment is configured to predict a time at which the temperature of at least one of the inverter 35 and the motor-generator 36 reaches the predetermined threshold PT, and set the operation mode of the refrigeration cycle device 10 to the chiller ON mode until the predicted time is reached.

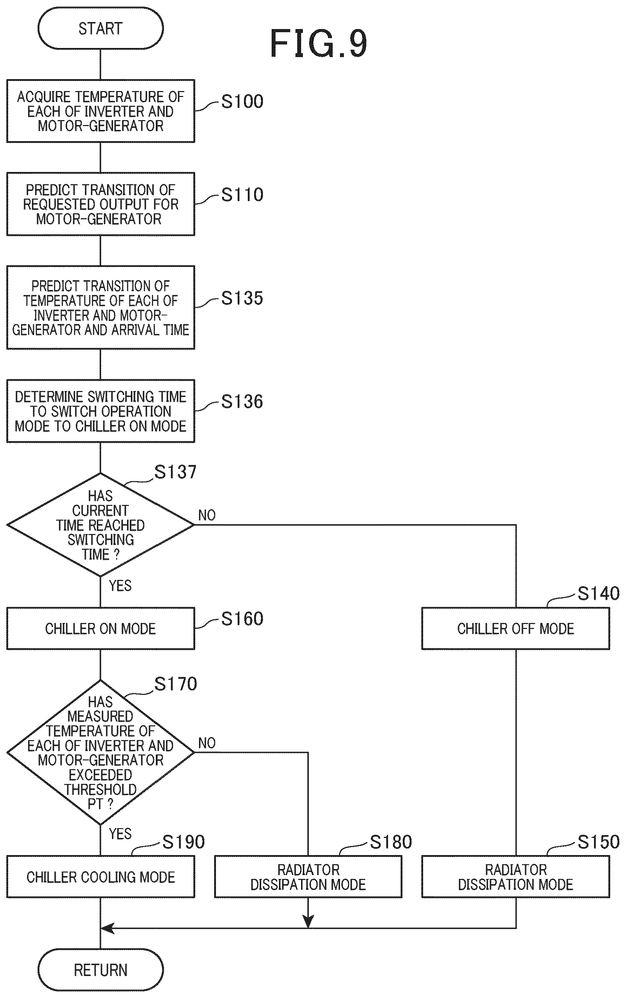

Fig. 9 is a flowchart showing a control routine to be executed every predetermined period by the controller 60 of the second embodiment. The operations in steps S100 and S110 of the control routine according to the second embodiment are identical to those of the control routine according to the first embodiment.

Following the operation in step S110, the controller 60 predicts the transition of each of the temperature of the inverter 35 and the temperature of the motor-generator 36 in accordance with the predicted transition of the requested output for the motor-generator 36, and predicts a time, i.e., an arrival time, at which the temperature of each of the inverter 35 and the motor-generator 36 will reach the predetermined threshold PT in step S135.

Next, the controller 60 determines, based on the arrival time, a switching time to switch the operation mode of the refrigeration cycle device 10 to the chiller ON mode in step S136. Specifically, the controller 60 determines the switching time by subtracting, from the arrival time, the time required to cool the coolant from the current temperature to the target temperature in step S136. Accordingly, switching the operation mode of the refrigeration cycle device 10 to the chiller ON mode at the switching time enables the coolant to be cooled to the target temperature at the arrival time.

Following the operation in step S136, the controller 60 determines whether the current time has reached the switching time in step S137.

In response to determination that the current time has not reached the switching time (NO in step S137), the control routine proceeds to step S140. In step S140, the controller 60 sets the operation mode of the refrigeration cycle device 10 to the chiller OFF mode, and sets the circulation mode of the low-temperature coolant circuit 30 to the radiator dissipation mode in step S150. This results in, as illustrated in Fig. 3, heat wasted from the inverter 35 and motor-generator 36 being received in the low-temperature radiator 32 and thereafter dissipated by the low-temperature radiator 32 into the outside air.

Otherwise, in response to determination that the current time has reached the switching time (YES in step S137), the control routine proceeds to step S160. In step S160, the controller 60 sets the operation mode of the refrigeration cycle device 10 to the chiller ON mode. This results in, as illustrated in Fig. 4, the coolant in the low-temperature coolant circuit 30 being cooled in the chiller 17. The operations in steps S170 to S190 according to the second embodiment are identical to those in steps S170 to S190 according to the first embodiment.

As seen by the operations in steps S135 to S160, the controller 60 according to the second embodiment is configured to determine the chiller cooling start timing that enables the coolant to be cooled to the target temperature until the temperature of each of the inverter 35 and the motor-generator 36 reaches the predetermined threshold PT.

This configuration supplies the coolant whose temperature has reached the target temperature to the inverter 35 and the motor-generator 36, making it possible to cool the inverter 35 and the motor-generator 36 more immediately

Third embodiment

As seen by the operations in steps S130 to S160, the first embodiment is configured to set the operation mode of the refrigeration cycle device 10 to the chiller ON mode in response to determination that the predicted temperature of at least one of the inverter 35 and the motor-generator 36 has exceeded the predetermined threshold PT. In other words, the first embodiment is configured to set the operation mode of the refrigeration cycle device 10 to the chiller ON mode in response to determination that a request for cooling the coolant in the low-temperature coolant circuit 30 has occurred. This causes the chiller 17 to cool the coolant in the low-temperature coolant circuit 30 in the chiller ON mode such that the temperature of the coolant approaches the target temperature.

In contrast, the third embodiment is configured to cause the chiller 17 to cool the coolant in the low-temperature coolant circuit 30 such that the temperature of the coolant becomes lower than a predetermined temperature before the operation mode of the refrigeration cycle device 10 is set to the chiller ON mode in step S160. In other words, the third embodiment is configured to cause the chiller 17 to cool the coolant in the low-temperature coolant circuit 30 such that the temperature of the coolant becomes lower than the predetermined temperature before the request for cooling the coolant in the low-temperature coolant circuit 30 has occurred. For example, no request for cooling the coolant in the low-temperature coolant circuit 30 has occurred at startup of the vehicle. The predetermined temperature is set to be higher than the target temperature and lower than the outside air temperature.

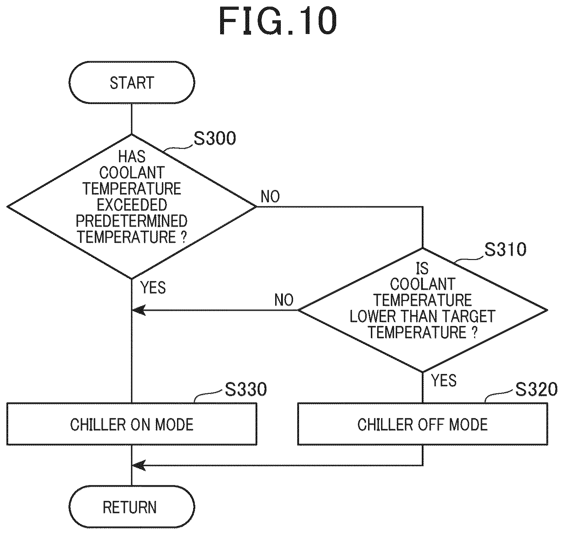

Fig. 10 is a flowchart showing a control routine to be executed every predetermined period by the controller 60 of the third embodiment. The controller 60 is configured to execute the control routine illustrated in Fig. 10 before the operation mode of the refrigeration cycle device 10 is set to the chiller ON mode in step S160. In other words, the controller 60 is configured to execute the control routine illustrated in Fig. 10 when no request for cooling the coolant in the low-temperature coolant circuit 30 by the chiller 17 has occurred.

When starting the control routine, the controller 60 determines whether the temperature of the coolant in the low-temperature coolant circuit 30 has exceeded the predetermined temperature in step S300.

Upon determining that the temperature of the coolant in the low-temperature coolant circuit 30 has not exceeded the predetermined temperature (NO in step S300), the control routine proceeds to step S310. In step S310, the controller 60 determines whether the temperature of the coolant in the low-temperature coolant circuit 30 is lower than the target temperature.

Upon determining that the temperature of the coolant in the low-temperature coolant circuit 30 is lower than the target temperature (YES in step S310), the control routine proceeds to step S320. In step S320, the controller 60 sets the operation mode of the refrigeration cycle device 10 to the chiller OFF mode. That is, because there is no need of further cooling of the coolant in the low-temperature coolant circuit 30, the coolant in the low-temperature coolant circuit 30 is not cooled by the chiller 17.

Otherwise, upon determining that the temperature of the coolant in the low-temperature coolant circuit 30 has exceeded the predetermined temperature (YES in step S300) or that the temperature of the coolant in the low-temperature coolant circuit 30 is not lower than the target temperature (NO in step S310), the control routine proceeds to step S330. In step S330, the controller 60 sets the operation mode of the refrigeration cycle device 10 to the chiller ON mode. This enables the chiller 17 to maintain the temperature of the coolant in the low-temperature coolant circuit 30 to be higher than or equal to the target temperature and lower than or equal to the predetermined temperature.

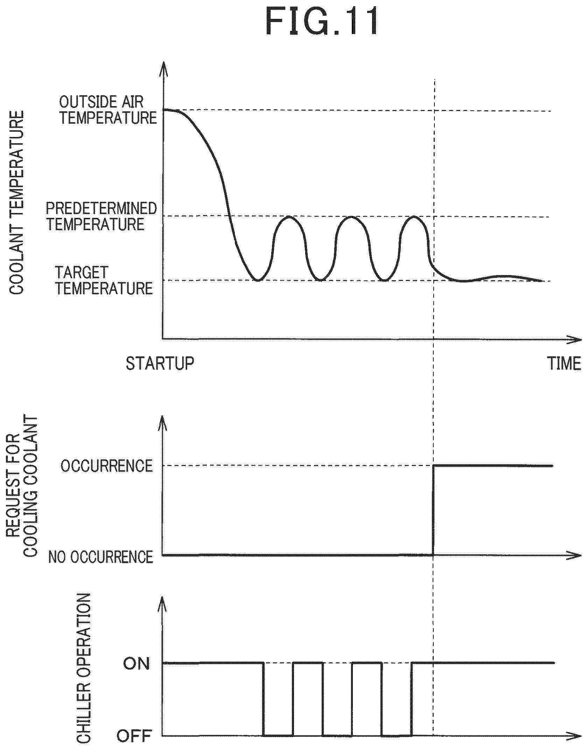

Fig. 11 illustrates an operation example of the vehicular air conditioner 1 in accordance with the control routine described above.

The operation example illustrated in Fig. 11 shows that, because the temperature of the coolant in the low-temperature coolant circuit 30 is substantially identical to that of the outside air and higher than the predetermined temperature at startup of the vehicle, the operation mode of the refrigeration cycle device 10 is set to the chiller ON mode. This causes the chiller 17 to cool the coolant in the low-temperature coolant circuit 30, resulting in the temperature of the coolant decreasing.

When the temperature of the coolant in the low-temperature coolant circuit 30 becomes lower than the target temperature, the operation mode of the refrigeration cycle device 10 is set to the chiller OFF mode, so that cooling of the coolant in the low-temperature coolant circuit 30 is not carried out by the chiller 17, resulting in the temperature of the coolant increasing.

When the temperature of the coolant in the low-temperature coolant circuit 30 becomes higher than the predetermined temperature, the operation mode of the refrigeration cycle device 10 is set to the chiller ON mode. This causes the chiller 17 to cool the coolant in the low-temperature coolant circuit 30, resulting in the temperature of the coolant decreasing.

Repeated switching between the chiller ON mode and the chiller OFF mode enables the temperature of the coolant in the low-temperature coolant circuit 30 to be maintained between the target temperature and the predetermined temperature. When the operation mode of the refrigeration cycle device 10 is switched to the chiller ON mode by the controller 60 in step S160, that is, the request for cooling the coolant in the low-temperature coolant circuit 30 has occurred, repeated switching between the chiller ON mode and the chiller OFF mode is terminated so that the chiller ON mode is continuously maintained.

When repeated switching between the chiller ON mode and the chiller OFF mode is terminated, the temperature of the coolant in the low-temperature coolant circuit 30 is not substantially identical to the outside air temperature but has decreased between the target temperature and the predetermined temperature due to cooling of the coolant. This therefore results in the temperature of the coolant in the low-temperature coolant circuit 30 reaching the target temperature immediately.

The operation mode of the refrigeration cycle device 10 is switched to the chiller OFF mode and the low-temperature side pump 31 is stopped to thereby stop circulation of the coolant in the low-temperature coolant circuit 30 when the temperature of the coolant in the low-temperature coolant circuit 30 becomes lower than the target temperature. This suppresses an increase in the temperature of the coolant in the low-temperature coolant circuit 30.

The controller 60 according to the third embodiment is configured to determine switching between the chiller ON mode and the chiller OFF mode to thereby cause the temperature of the coolant in the low-temperature coolant circuit 30 to be lower than or equal to the predetermined temperature after startup of the vehicle and before the chiller cooling start timing.

This configuration enables the coolant in the low-temperature coolant circuit 30 to be cooled after startup of the vehicle, making it possible to cool the inverter 35 and the motor-generator 36 more immediately.

Cooling of the coolant in the low-temperature coolant circuit 30 is started at startup of the vehicle according to the third embodiment, but cooling of the coolant in the low-temperature coolant circuit 30 may be started during pre-air-conditioning; the pre-air-conditioning refers to air conditioning carried out before one or more occupants enter the vehicle.

Fourth embodiment

The third embodiment is configured to cause the chiller 17 to cool the coolant in the low-temperature coolant circuit 30 such that the temperature of the coolant is higher than or equal to the target temperature and lower than or equal to the predetermined temperature before the operation mode of the refrigeration cycle device 10 is set to the chiller ON mode in step S160. In other words, the third embodiment is configured to cause the chiller 17 to cool the coolant in the low-temperature coolant circuit 30 such that the temperature of the coolant is higher than or equal to the target temperature and lower than or equal to the predetermined temperature before the request for cooling the coolant in the low-temperature coolant circuit 30 has occurred.

In contrast, the fourth embodiment is configured to cause the chiller 17 to cool the coolant in the low-temperature coolant circuit 30 such that the temperature of the coolant lies within a predetermined temperature range that is lower than the outside air temperature before forced cooling of the inverter 35 and the motor-generator 36 is needed.

Specifically, the fourth embodiment is configured to cause the chiller 17 to cool the coolant in the low-temperature coolant circuit 30 such that an absolute difference between the temperature of the coolant and the outside air temperature lies within a predetermined difference range that is higher than or equal to a first temperature difference $\alpha1$ and lower than or equal to a second temperature difference $\alpha2$. The first temperature difference $\alpha1$ is set to be lower than an absolute difference between the outside air temperature and the target temperature and higher than the second temperature difference $\alpha2$.

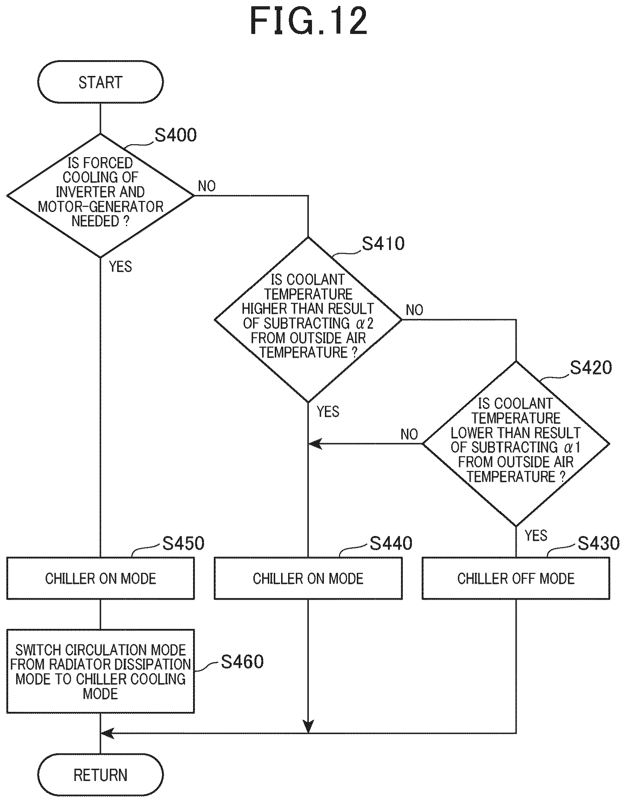

Fig. 12 is a flowchart showing a control routine to be executed every predetermined period by the controller 60 of the fourth embodiment. The controller 60 is configured to execute the control routine illustrated in Fig. 12 before the operation mode of the refrigeration cycle device 10 is set to the chiller ON mode in step S160. In other words, the controller 60 is configured to execute the control routine illustrated in Fig. 12 when no request for cooling the coolant in the low-temperature coolant circuit 30 by the chiller 17 has occurred.

When starting the control routine, the controller 60 determines whether forced cooling of the inverter 35 and the motor-generator 36 is needed in step S400. For example, the controller 60 determines that forced cooling of the inverter 35 and the motor-generator 36 is needed upon determining that the temperature of at least one of the inverter 35 and the motor-generator 36 exceeds the predetermined threshold PT.

Upon determining that forced cooling of the inverter 35 and the motor-generator 36 is not needed (NO in step S400), the control routine proceeds to step S410. In step S410, the controller 60 determines whether the temperature of the coolant in the low-temperature coolant circuit 30 is higher than the result of subtracting the second temperature difference $\alpha2$ from the outside air temperature.

Upon determining that the temperature of the coolant in the low-temperature coolant circuit 30 is not higher than the result of subtracting the second temperature difference $\alpha2$ from the outside air temperature (NO in step S410), the control routine proceeds to step S420. In step S420, the controller 60 determines whether the temperature of the coolant in the low-temperature coolant circuit 30 is lower than the result of subtracting the first temperature difference $\alpha1$ from the outside air temperature.

Upon determining that the temperature of the coolant in the low-temperature coolant circuit 30 is lower than the result of subtracting the first temperature difference α1 from the outside air temperature (YES in step S420), the control routine proceeds to step S430. In step S430, the controller 60 sets the operation mode of the refrigeration cycle device 10 to the chiller OFF mode.

Otherwise, upon determining that the temperature of the coolant in the low-temperature coolant circuit 30 is higher than the result of subtracting the second temperature difference α2 from the outside air temperature (YES in step S410) or that the temperature of the coolant in the low-temperature coolant circuit 30 is not lower than the result of subtracting the first temperature difference α1 from the outside air temperature (NO in step S420), the control routine proceeds to step S440. In step S440, the controller 60 sets the operation mode of the refrigeration cycle device 10 to the chiller ON mode.

Otherwise, upon determining that forced cooling of the inverter 35 and the motor-generator 36 is needed (YES in step S400), the control routine proceeds to step S450. In step S450, the controller 60 sets the operation mode of the refrigeration cycle device 10 to the chiller ON mode.

Following the operation in step S450, the controller 60 switches the circulation mode of the low-temperature coolant circuit 30 from the radiator dissipation mode to the chiller cooling mode in step S460. This causes the chiller 17 to cool the coolant in the low-temperature coolant circuit 30 such that the temperature of the coolant approaches the target temperature. This results in cooling of the inverter 35 and the motor-generator 36 being carried out by the coolant cooled by the chiller 17.

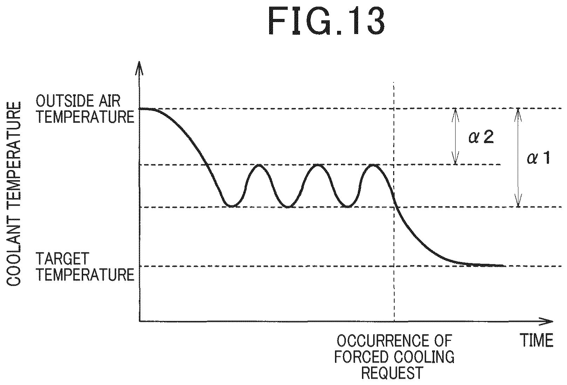

Fig. 13 illustrates an operation example of the vehicular air conditioner 1 in accordance with the control routine described above.

The operation example illustrated in Fig. 13 shows that, because the temperature of the coolant in the low-temperature coolant circuit 30 is substantially identical to that of the outside air and higher than the result of subtracting the second temperature difference α2 from the outside air temperature, the operation mode of the refrigeration cycle device 10 is set to the chiller ON mode. This causes the chiller 17 to cool the coolant in the low-temperature coolant circuit 30, resulting in the temperature of the coolant decreasing.

When the temperature of the coolant in the low-temperature coolant circuit 30 becomes lower than the result of subtracting the first temperature difference α1 from the outside air temperature, the operation mode of the refrigeration cycle device 10 is set to the chiller OFF mode. This results in no cooling of the coolant in the low-temperature coolant circuit 30 by the chiller 17, resulting in the temperature of the coolant increasing.

When the temperature of the coolant in the low-temperature coolant circuit 30 becomes lower than the result of subtracting the second temperature difference α2 from the outside air temperature, the operation mode of the refrigeration cycle device 10 is set to the chiller ON mode. This causes the chiller 17 to cool the coolant in the low-temperature coolant circuit 30, resulting in the temperature of the coolant decreasing.

Repeated switching between the chiller ON mode and the chiller OFF mode enables the temperature of the coolant in the low-temperature coolant circuit 30 to be maintained between the result of subtracting the first temperature difference α1 from the outside air temperature and the result of subtracting the second temperature difference α2 from the outside air temperature. When the operation mode of the refrigeration cycle device 10 is switched to the chiller ON mode by the controller 60 in step S160, repeated switching between the chiller ON mode and the chiller OFF mode is terminated so that the chiller ON mode is continuously maintained.

When repeated switching between the chiller ON mode and the chiller OFF mode is terminated, the temperature of the coolant in the low-temperature coolant circuit 30 is not substantially identical to the outside air temperature but has decreased between the result of subtracting the first temperature difference α1 from the outside air temperature and the result of subtracting the second temperature difference α2 from the outside air temperature. This therefore results in the temperature of the coolant in the low-temperature coolant circuit 30 reaching the target temperature immediately.

The controller 60 according to the fourth embodiment is configured to cause the chiller 17 to cool the coolant in the low-temperature coolant circuit 30 before forced cooling of the inverter 35 and the motor-generator 36 is needed to accordingly ensure the temperature of the coolant in the low-temperature coolant circuit 30 within a temperature range higher than the target temperature. This therefore makes it possible to improve energy conservation as compared with the third embodiment that cools the coolant in the low-temperature coolant circuit 30 to the target temperature.

Fifth embodiment

Each of the above embodiments is configured to cause the chiller 17 to cool the coolant in the low-temperature coolant circuit 30 in the chiller ON mode such that the temperature of the coolant approaches the target temperature.

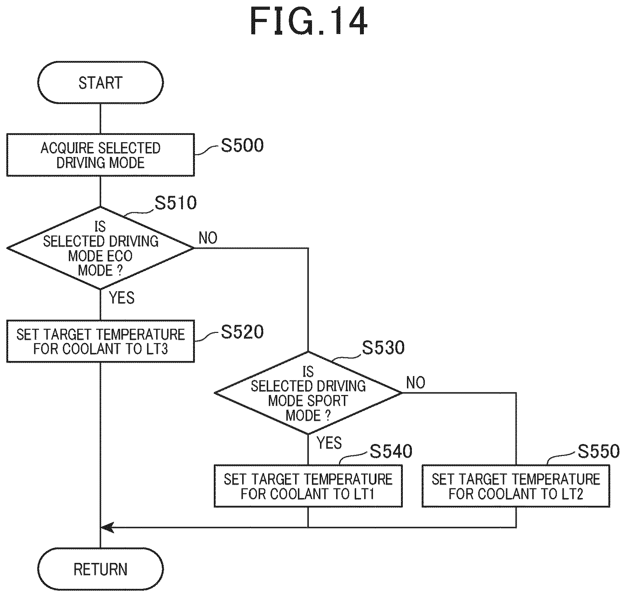

The fifth embodiment is additionally configured to switch the target temperature among predetermined temperatures in accordance with an occupant's selected one of the driving modes
Fig. 14 is a flowchart showing a control routine to be executed every predetermined period by the controller 60 of the fifth embodiment.

When starting the control routine, the controller 60 acquires one of the driving modes, which is selected by an occupant of the vehicle in step S500.

Next, the controller 60 determines whether the selected driving mode is the Eco mode in step S510.

Upon determining that the selected driving mode is the Eco mode (YES in step S510), the control routine proceeds to step S520. In step S520, the controller 60 sets the target temperature for the coolant in the low-temperature coolant circuit 30 to an Eco-mode temperature LT3.

Otherwise, upon determining that the selected driving mode is not the Eco mode (NO in step S510), the control routine proceeds to step S530.

In step S530, the controller 60 determines whether the selected driving mode is the Sport mode.

Upon determining that the selected driving mode is the Sport mode (YES in step S530), the control routine proceeds to step S540. In step S540, the controller 60 sets the target temperature for the coolant in the low-temperature coolant circuit 30 to a Sport-mode temperature LT1 that is lower than the Eco-mode temperature LT3.

Otherwise, upon determining that the selected driving mode is not the Sport mode (NO in step S530), the control routine proceeds to step S550.

In step S550, the controller 60 sets the target temperature for the coolant in the low-temperature coolant circuit 30 to a Normal-mode temperature LT2 that is higher than the Sport-mode temperature LT1 and lower than the Eco-mode temperature LT3.

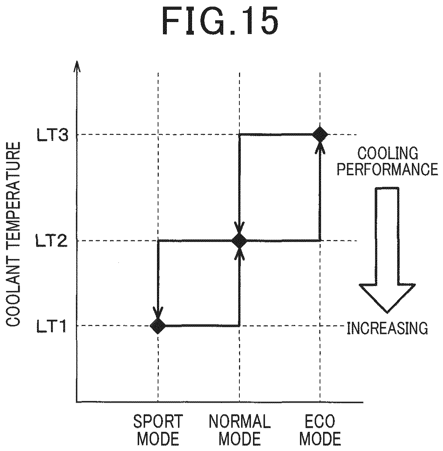

Executing the control routine described above results in, as illustrated in Fig. 15, the temperature of the coolant in the low-temperature coolant circuit 30 becoming

(I) The Sport-mode temperature LT1 during the driving mode being set to the Sport mode,
(II) The Normal-mode temperature LT2, which is higher than the Sport-mode temperature LT1, during the driving mode being set to the Normal mode, and
(III) The Eco-mode temperature LT3, which is higher than the Normal-mode temperature LT2, during the driving mode being set to the Eco mode

This therefore enables the refrigeration cycle device 10 to have a higher cooling performance with respect to the inverter 35 and the motor-generator 36, making it possible to (i) drive the motor-generator 36 with higher output power and (ii) suppress the cooling performance of the refrigeration cycle device 10 with respect to the inverter 35 and the motor-generator 36 during the driving mode being set to the Eco mode to accordingly improve energy conservation.

The control apparatus 60 according to the fifth embodiment is configured to determine the target temperature for the coolant in the low-temperature coolant circuit 30 in accordance with a selected one of the driving modes of the vehicle. That is, the control apparatus 60 according to the fifth embodiment is configured to determine the cooling start timing based on both the driving-condition related information and the selected one of the driving modes of the vehicle.

This configuration therefore makes it possible to cool the coolant in the low-temperature coolant circuit 30 at a timing suitable for the currently selected driving mode of the vehicle. Additionally, this configuration makes it possible to cool the coolant in the low-temperature coolant circuit 30 to the target temperature that is determined to be suitable for the currently selected driving mode of the vehicle. Accordingly, this configuration makes it possible to determine the cooling strategy for the coolant in the low-temperature coolant circuit 30 to be suitable for the currently selected driving mode of the vehicle.

The fifth embodiment determines the target temperature for the coolant in accordance with a selected one of the Eco mode, Normal mode, and Sport mode, but can determine the target temperature for the coolant in accordance with a selected one of the Eco mode and Sport mode.

The controller 60 of the fifth embodiment is configured to set the target temperature for the coolant in the low-temperature coolant circuit 30 to the Eco-mode temperature LT3 upon determining that the driving mode of the vehicle is set to the Eco mode (see steps S520 to S530). However, the controller 60 can be configured not to perform setting of the target temperature for the coolant in the low-temperature coolant circuit 30, so that the coolant temperature is left uncontrolled.

Upon determining that the driving mode of the vehicle is set to the Eco mode, the controller 60 of the fifth embodiment may be configured to set the target temperature for the coolant in the low-temperature coolant circuit 30 to (i) a value required to cool the battery 33 when there is a need of cooling the battery 33 or (ii) a value that is the same as the outside air temperature when there is no need of cooling the battery 33. If the target temperature for the coolant in the low-temperature coolant circuit 30 is set to the value that is the same as the outside air temperature, heat of the coolant in the low-temperature coolant circuit 30 may be dissipated by the low-temperature side radiator 32 without being cooled by the chiller 17.

Sixth embodiment

Each of the above embodiments is configured such that the battery 33 is cooled by the coolant in the low-temperature coolant circuit 30 and the air to be blown into the cabin of the vehicle is cooled by the first evaporator 14.

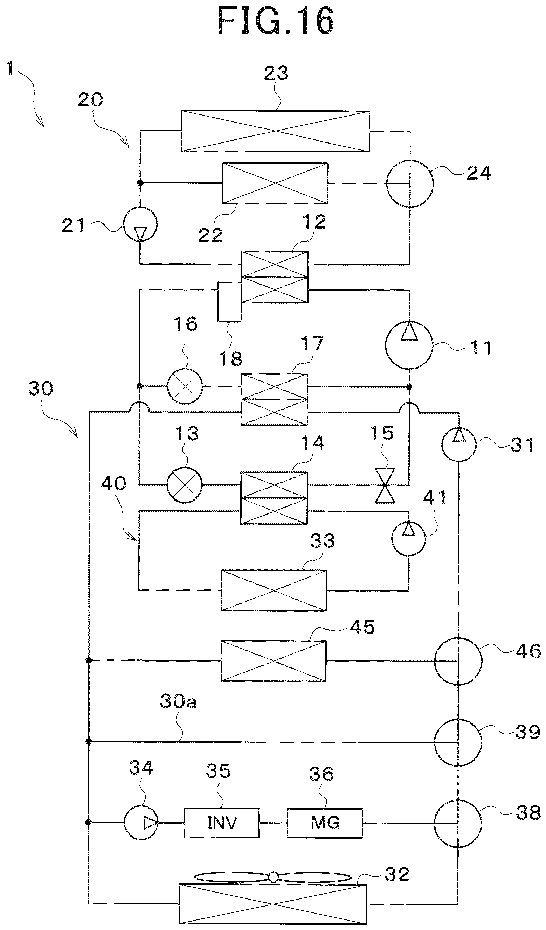

In contrast, the sixth embodiment is configured such that, as illustrated in Fig. 16, the battery 33 is cooled by a coolant cooled by the first evaporator 14, and the air to be blown into the cabin of the vehicle is cooled by the coolant in the low-temperature coolant circuit 30

The first evaporator 14 according to the sixth embodiment serves as a battery chiller that exchanges between the low-pressure refrigerant discharged from the first expansion valve 13 and the coolant in a battery coolant circuit 40. The coolant in the battery coolant circuit 40 is a fluid as a heat medium. The coolant suitable for use in the battery coolant circuit 40 according to the sixth embodiment includes an anti-freeze fluid or a liquid containing at least ethylene glycol, dimethylpolysiloxane, or a nanofluid.

A battery pump 41 is disposed in the battery coolant circuit 40. The battery pump 41 is a heat medium pump that draws and discharges the coolant.

A cooler core 45 and a cooler-core three-way valve 46 are disposed in the low-temperature coolant circuit 30. The cooler core 45 is a heat medium to air heat exchanger configured to exchange heat between the coolant cooled by the chiller 17 and the air to be blown into the cabin of the vehicle to thereby heat the air to be blown into the cabin of the vehicle. The cooler-core three-way valve 46 is configured to switch the flow of the coolant with respect to the cooler core 45. The controller 60 is configured to control the operation of the cooler-core three-way valve 46.

The above control procedure described in each embodiment can be applied to the sixth embodiment, which achieves the same advantageous effects that are the same as those achieved by the corresponding embodiment.

The present disclosure is not limited to the above embodiments, and therefore may be modified for example as follows within the scope of the present disclosure.

Each embodiment uses a coolant as a heat medium, but can use one of various media, such as oil. Each embodiment can use, as a heat medium, a nanofluid. Nanofluids are fluids that contain nanoparticles with particle sizes on the order of nanometers.

The refrigeration cycle device 10 according to each embodiment uses a fluorocarbon refrigerant as the refrigerant, but may use, for example, a natural refrigerant, such as a carbon dioxide, or a hydrocarbon refrigerant as the refrigerant.

The refrigeration cycle device 10 according to each embodiment is configured as a subcritical refrigeration cycle in which the pressure of the high-pressure side refrigerant does not exceed the critical pressure of the refrigerant, but may be configured as a supercritical refrigeration cycle in which the pressure of the high-pressure side refrigerant exceeds the critical pressure of the refrigerant.

The high-temperature side radiator 23 and the low-temperature side radiator 32 are configured as independent separators according to each embodiment, but may be configured as a single radiator.

For example, the tank of the high-temperature side radiator 23 and that of the low-temperature side radiator 32 may be integrated with each other to constitute a single radiator.

The second expansion valve 16 according to each embodiment is comprised of a decompression member that decompresses a refrigerant and a shutoff member integrated with the decompression member and configured to fully close the refrigerant passage to accordingly shut off the flow of the refrigerant, but may be configured such that the shutoff member is separated from the second expansion valve 16.

The condenser 12 according to each embodiment, which is a heat exchanger that exchanges heat between a refrigerant and a coolant, may be configured as a heat exchanger that exchanges heat between a refrigerant and air.

The battery 33 according to each embodiment, which is arranged to be cooled by a coolant cooled by a refrigerant, may be cooled directly by a refrigerant or cooled by air cooled by a refrigerant.

The refrigeration cycle device 10 according to each embodiment, which is configured as a receiver cycle including a receiver 18, may be configured as an accumulator cycle including an accumulator.

The following describes the various feature items included in the present disclosure.

[First feature item]

A refrigeration cycle apparatus of the first feature item includes a heat medium circuit (30) in which a heat medium is circulated, a powertrain device (35, 36) that is an electrical device for generating driving power for a vehicle, the powertrain device being arranged to be cooled by the heat medium, and a radiator (32) configured to perform first heat exchange between the heat medium and outside air. The refrigeration cycle apparatus includes a chiller (17) configured to perform second heat exchange between a low-pressure refrigerant and the heat medium, and a circuit switching unit (38) configured to switch the heat medium circuit between (i) a first circulation state in which the heat medium is circulated between the powertrain device and the radiator and (ii) a second circulation state in which the heat medium is circulated between the powertrain device and the chiller.

The refrigeration cycle apparatus includes a circuit switching determiner (60f) configured to determine whether a temperature of the powertrain device is higher than a predetermined threshold in the first circulation state, and determine that the heat medium circuit is switched by the circuit switching unit from the first circulation state to the second circulation state upon determining that the temperature of the powertrain device is higher than the predetermined threshold in the first circulation state.

The refrigeration cycle apparatus includes a cooling switching unit (16) configured to switch a cooling mode of the heat medium between (i) a chiller cooling state in which the heat medium is cooled by the chiller and (ii) a chiller non-cooling state in which the heat medium is not cooled by the chiller.

The refrigeration cycle apparatus includes a chiller cooling determiner (60c) configured to determine a chiller cooling start timing of switching the cooling mode of the heat medium from the chiller non-cooling state to the chiller cooling state in accordance with driving-condition related information that is related to a driving condition of the vehicle.

[Second feature item]

In the refrigeration cycle apparatus of the second feature item, which depends from the first feature item, the chiller cooling start timing determined by the chiller cooling determiner is earlier than a timing at which the heat medium circuit is switched by the circuit switching unit from the first circulation state to the second circulation state.

[Third feature item]

In the refrigeration cycle apparatus of the third feature item, which depends from the first feature item or the second feature item, the chiller cooling determiner is configured to determine switching between the chiller cooling state and the chiller non-cooling state to thereby cause the temperature of the heat medium to be lower than or equal to a predetermined temperature after startup of the vehicle and before the chiller cooling start timing.

[Fourth feature item]

In the refrigeration cycle apparatus of the fourth feature item, which depends from any one of the first to third feature items, the chiller cooling determiner is configured to determine the chiller cooling start timing based on when a temperature of the powertrain device predicted based on the driving-condition related information exceeds the predetermined threshold.

[Fifth feature item]

In the refrigeration cycle apparatus of the fifth feature item, which depends from the fourth feature item, the chiller cooling determiner is configured to determine a target temperature for the heat medium in accordance with the predicted temperature of the powertrain device.

[Sixth feature item]

In the refrigeration cycle apparatus of the sixth feature item, which depends from any one of the first to third feature items, the chiller cooling determiner is configured to determine the chiller cooling start timing to cause the heat medium to be cooled to the target temperature until the temperature of the powertrain device reaches the predetermined threshold.

[Seventh feature item]

In the refrigeration cycle apparatus of the seventh feature item, which depends from the first feature item, the chiller cooling determiner is configured to determine the chiller cooling start timing in accordance with the driving-condition related information and a driving mode of the vehicle.

[Eighth feature item]

In the refrigeration cycle apparatus of the eighth feature item, which depends from the seventh feature item, the chiller cooling determiner is configured to determine a target temperature for the heat medium in accordance with the driving mode of the vehicle.

While the illustrative embodiments of the present disclosure have been described herein, the present disclosure is not limited to the embodiments and configurations described herein. Specifically, the present disclosure can include any and all modified embodiments and modifications within the range of equivalency of the present disclosure. Additionally, various combinations of the embodiments, modified combinations to which at least one element has been added, or modified combinations from which at least one element has been eliminated are within the scope of the present disclosure and/or the patentable ideas of the present disclosure.

**Claims**

1. A refrigeration cycle apparatus comprising:

   a heat medium circuit (30) in which a heat medium is circulated;
   a powertrain device (35, 36) that is an electrical device for generating driving power for a vehicle, the power train device being arranged to be cooled by the heat medium;
   a radiator (32) configured to perform first heat exchange between the heat medium and outside air;
   a chiller (17) configured to perform second heat exchange between a low-pressure refrigerant and the heat medium;
   a circuit switching unit (38) configured to switch the heat medium circuit between:

      a first circulation state in which the heat medium is circulated between the powertrain device and the radiator; and
      a second circulation state in which the heat medium is circulated between the powertrain device and the chiller; and

   a circuit switching determiner (60f) configured to:

      determine whether a temperature of the powertrain device is higher than a predetermined threshold in the first circulation state; and
      determine that the heat medium circuit is switched by the circuit switching unit from the first circulation state to the second circulation state upon determining that the temperature of the powertrain device is higher than the predetermined threshold in the first circulation state;

   a cooling switching unit (16) configured to switch a cooling mode of the heat medium between:

      a chiller cooling state in which the heat medium is cooled by the chiller; and
      a chiller non-cooling state in which the heat medium is not cooled by the chiller; and

   a chiller cooling determiner (60c) configured to determine a chiller cooling start timing of switching the cooling mode of the heat medium from the chiller non-cooling state to the chiller cooling state in accordance with driving-condition related information that is related to a driving condition of the vehicle.

2. The refrigeration cycle apparatus according to claim 1, wherein:
   the chiller cooling start timing determined by the chiller cooling determiner is earlier than a timing at which the heat medium circuit is switched by the circuit switching unit from the first circulation state to the second circulation state.

3. The refrigeration cycle apparatus according to claim 1, wherein:
   the chiller cooling determiner is configured to determine switching between the chiller cooling state and the chiller non-cooling state to thereby cause the temperature of the heat medium to be lower than or equal to a predetermined temperature after startup of the vehicle and before the chiller cooling start timing.

4. The refrigeration cycle apparatus according to any one of claims 1 to 3, wherein:
   the chiller cooling determiner is configured to determine the chiller cooling start timing based on when a temperature of the powertrain device predicted based on the driving-condition related information exceeds the predetermined threshold.

5. The refrigeration cycle apparatus according to claim 4, wherein:
   the chiller cooling determiner is configured to determine a target temperature for the heat medium in accordance with the predicted temperature of the powertrain device.

6. The refrigeration cycle apparatus according to any one of claims 1 to 3, wherein:
   the chiller cooling determiner is configured to determine the chiller cooling start timing to cause the heat medium to be cooled to the target temperature until the temperature of the powertrain device reaches the predetermined threshold.

7. The refrigeration cycle apparatus according to claim 1, wherein:
the chiller cooling determiner is configured to determine the chiller cooling start timing in accordance with the driving-condition related information and a driving mode of the vehicle.

8. The refrigeration cycle apparatus according to claim 7, wherein:
the chiller cooling determiner is configured to determine a target temperature for the heat medium in accordance with the driving mode of the vehicle.

# FIG.1

EP 4 678 455 A1

# FIG.2

60

| 61 | INSIDE AIR TEMPERATURE SENSOR |
| 62 | OUTSIDE AIR TEMPERATURE SENSOR |
| 63 | SOLAR RADIATION AMOUNT SENSOR |
| 64 | FIRST EVAPORATOR TEMPERATURE SENSOR |
| 65 | SECOND EVAPORATOR TEMPERATURE SENSOR |
| 66 | LOW-TEMPERATURE COOLANT TEMPERATURE SENSOR |
| 67 | BATTERY TEMPERATURE SENSOR |
| 68 | OPERATION PANEL |
| 75 | VEHICLE NAVIGATION SYSTEM |

CONTROLLER

60a
60b
60c

60d
60e
60f

| COMPRESSOR | 11 |
| FIRST EXPANSION VALVE | 13 |
| SECOND EXPANSION VALVE | 16 |
| HIGH-TEMPERATURE SIDE PUMP | 21 |
| ON-OFF VALVE | 24 |
| ELECTRIC HEATER | 25 |
| LOW-TEMPERATURE SIDE PUMP | 31 |
| POWERTRAIN PUMP | 34 |
| THREE-WAY VALVE | 37, 38, 39 |
| INSIDE/OUTSIDE AIR SWITCHING DOOR | 52a |
| INTERIOR BLOWER | 53 |

| 71 | INVERTER TEMPERATURE SENSOR |
| 72 | MOTOR-GENERATOR TEMPERATURE SENSOR |

POWERTRAIN CONTROLLER ~70

# FIG.3

RADIATOR DISSIPATION MODE

# FIG.4

RADIATOR DISSIPATION MODE AND CHILLER ON MODE

# FIG.5

CHILLER COOLING MODE

# FIG.6

START

ACQUIRE TEMPERATURE OF
EACH OF INVERTER AND
MOTOR-GENERATOR — S100

PREDICT TRANSITION OF
REQUESTED OUTPUT FOR
MOTOR-GENERATOR — S110

PREDICT TEMPERATURE OF
EACH OF INVERTER AND
MOTOR-GENERATOR — S120

S130
HAS
TRANSITION
OF PREDICTED
TEMPERATURE EXCEED
THRESHOLD
PT ?

NO →

YES

CHILLER ON MODE — S160

CHILLER OFF MODE — S140

S170
HAS
MEASURED
TEMPERATURE OF
EACH OF INVERTER AND
MOTOR-GENERATOR
EXCEEDED
THRESHOLD
PT ?

NO →

YES — S190

CHILLER COOLING MODE

RADIATOR
DISSIPATION MODE — S180

RADIATOR
DISSIPATION MODE — S150

RETURN

26

# FIG.7

START

RECOGNIZE THERMOPHYSICAL PROPERTY INFORMATION ON EACH OF INVERTER AND MOTOR-GENERATOR — S200

ACQUIRE REQUESTED OUTPUT VALUE FOR MOTOR-GENERATOR — S210

CALCULATE THERMAL OUTPUT OF EACH OF INVERTER AND MOTOR-GENERATOR — S220

DETERMINE TARGET TEMPERATURE FOR COOLANT — S230

RETURN

# FIG.8

REQUESTED OUTPUT OF MOTOR-GENERATOR THAT HAS BEEN PREDICTED

PREDICTED TRANSITION

COMPARISON EXAMPLE (UNCONTROLLED)

TEMPERATURE OF EACH OF INVERTER AND MOTOR-GENERATOR

THRESHOLD PT

FIRST EMBODIMENT

COOLANT TEMPERATURE IN LOW-TEMPERATURE COOLANT CIRCUIT

CHILLER ON MODE

TARGET TEMPERATURE

CIRCULATION MODE

CHILLER COOLING MODE

RADIATOR DISSIPATION MODE

TIME

# FIG.9

```
            ┌──────────┐
            │  START   │
            └────┬─────┘
                 │
    ┌────────────────────────┐
    │ ACQUIRE TEMPERATURE OF │── S100
    │ EACH OF INVERTER AND   │
    │ MOTOR-GENERATOR        │
    └────────────┬───────────┘
                 │
    ┌────────────────────────┐
    │ PREDICT TRANSITION OF  │── S110
    │ REQUESTED OUTPUT FOR   │
    │ MOTOR-GENERATOR        │
    └────────────┬───────────┘
                 │
    ┌────────────────────────┐
    │ PREDICT TRANSITION OF  │── S135
    │ TEMPERATURE OF EACH OF │
    │ INVERTER AND MOTOR-    │
    │ GENERATOR AND ARRIVAL  │
    │ TIME                   │
    └────────────┬───────────┘
                 │
    ┌────────────────────────┐
    │ DETERMINE SWITCHING    │── S136
    │ TIME TO SWITCH         │
    │ OPERATION MODE TO      │
    │ CHILLER ON MODE        │
    └────────────┬───────────┘
                 │
              ◇ S137
         HAS CURRENT TIME ──── NO ──────────────────┐
         REACHED SWITCHING                           │
         TIME ?                                      │
              │ YES                                  │
    ┌──────────────────┐               ┌─────────────────────┐
    │ CHILLER ON MODE  │── S160        │ CHILLER OFF MODE    │── S140
    └────────┬─────────┘               └──────────┬──────────┘
             │                                     │
          ◇ S170                                   │
     HAS MEASURED                                  │
     TEMPERATURE OF                                │
     EACH OF INVERTER ── NO ──┐                    │
     AND MOTOR-GENERATOR      │                    │
     EXCEEDED THRESHOLD       │                    │
     PT ?                     │                    │
         │ YES                │                    │
  ┌──────────────┐  ┌──────────────┐  ┌──────────────┐
  │ CHILLER      │  │ RADIATOR     │  │ RADIATOR     │
  │ COOLING MODE │  │ DISSIPATION  │  │ DISSIPATION  │
  │              │  │ MODE         │  │ MODE         │
  └──────┬───────┘  └──────┬───────┘  └──────┬───────┘
     S190                 S180               S150
         │                 │                  │
         └─────────────────┴──────────────────┘
                 │
            ┌──────────┐
            │  RETURN  │
            └──────────┘
```

# FIG.10

```
                    ┌──────────┐
                    │  START   │
                    └────┬─────┘
                         │
                         │ ╭─ S300
                    ╱ HAS ╲
                   ╱ COOLANT ╲
                  ╱ TEMPERATURE ╲  NO
                 ◇  EXCEEDED     ◇──────────────┐
                  ╲ PREDETERMINED╱                │
                   ╲ TEMPERATURE?╱                │
                    ╲           ╱                 │
                         │ YES                    │ ╭─ S310
                         │                   ╱   IS   ╲
                         │              NO  ╱ COOLANT  ╲
                         │◄────────────────◇ TEMPERATURE ◇
                         │                  ╲ LOWER THAN ╱
                         │                   ╲ TARGET   ╱
                         │                    ╲TEMP?   ╱
              ╭─ S330    │                         │ YES      ╭─ S320
        ┌─────────────────┐              ┌──────────────────┐
        │ CHILLER ON MODE │              │ CHILLER OFF MODE │
        └────────┬────────┘              └─────────┬────────┘
                 │                                 │
                 │◄────────────────────────────────┘
            ┌────┴─────┐
            │  RETURN  │
            └──────────┘
```

30

# FIG.11

COOLANT TEMPERATURE

OUTSIDE AIR
TEMPERATURE

PREDETERMINED
TEMPERATURE

TARGET
TEMPERATURE

STARTUP

TIME

REQUEST FOR
COOLING COOLANT

OCCURRENCE

NO OCCURRENCE

CHILLER OPERATION

ON

OFF

# FIG.12

START

S400
IS FORCED COOLING OF INVERTER AND MOTOR-GENERATOR NEEDED ?

NO →

YES ↓

S410
IS COOLANT TEMPERATURE HIGHER THAN RESULT OF SUBTRACTING $\alpha 2$ FROM OUTSIDE AIR TEMPERATURE ?

NO →

YES ↓

S420
IS COOLANT TEMPERATURE LOWER THAN RESULT OF SUBTRACTING $\alpha 1$ FROM OUTSIDE AIR TEMPERATURE ?

NO →

YES ↓

S450
CHILLER ON MODE

S440
CHILLER ON MODE

S430
CHILLER OFF MODE

S460
SWITCH CIRCULATION MODE FROM RADIATOR DISSIPATION MODE TO CHILLER COOLING MODE

RETURN

# FIG.13

# FIG.14

START

ACQUIRE SELECTED
DRIVING MODE — S500

IS
SELECTED DRIVING
MODE ECO
MODE ? — S510 → NO

YES

SET TARGET TEMPERATURE
FOR COOLANT TO LT3 — S520

IS
SELECTED DRIVING
MODE SPORT
MODE ? — S530 → NO

YES — S540

SET TARGET TEMPERATURE
FOR COOLANT TO LT1

SET TARGET TEMPERATURE
FOR COOLANT TO LT2 — S550

RETURN

# FIG.15

# FIG.16

## INTERNATIONAL SEARCH REPORT

| International application No. |
|---|
| **PCT/JP2024/006569** |

**A. CLASSIFICATION OF SUBJECT MATTER**

*B60L 3/00*(2019.01)i; *B60K 11/04*(2006.01)i; *F25B 1/00*(2006.01)i
FI: B60L3/00 J; F25B1/00 399Y; B60K11/04 G

According to International Patent Classification (IPC) or to both national classification and IPC

**B. FIELDS SEARCHED**

Minimum documentation searched (classification system followed by classification symbols)

B60L3/00; B60K11/04; F25B1/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-26111 A (DENSO CORPORATION) 21 February 2019 (2019-02-21) paragraphs [0014]-[0173], fig. 1-9 | 1-8 |
| A | JP 2022-128546 A (DENSO CORPORATION) 02 September 2022 (2022-09-02) paragraph [0190] | 1-8 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **19 April 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/006569**

| Patent document cited in search report | | | Publication date (day/month/year) | Patent family member(s) | | | Publication date (day/month/year) |
|---|---|---|---|---|---|---|---|
| JP | 2019-26111 | A | 21 February 2019 | US | 2020/0164719 | A1 | |
| | | | | paragraphs [0027]-[0184], fig. 1-9 | | | |
| | | | | WO | 2019/026528 | A1 | |
| | | | | KR | 10-2019-0122765 | A | |
| | | | | CN | 110621525 | A | |
| JP | 2022-128546 | A | 02 September 2022 | US | 2023/0382195 | A1 | |
| | | | | paragraph [0205] | | | |
| | | | | WO | 2022/181110 | A1 | |
| | | | | CN | 116829386 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023032908 A

- JP 6791052 B